(19)

Europäisches Patentamt
European Patent Office
Office européen des brevets

(11)    **EP 1 858 012 A1**

(12)    **EUROPEAN PATENT APPLICATION**
published in accordance with Art. 158(3) EPC

(43) Date of publication:
    **21.11.2007   Bulletin 2007/47**

(51) Int Cl.:
    **G11B 7/135** (2006.01)     **G02B 5/18** (2006.01)
    **G02B 13/18** (2006.01)

(21) Application number: **06714553.2**

(22) Date of filing: **24.02.2006**

(86) International application number:
    **PCT/JP2006/303414**

(87) International publication number:
    **WO 2006/095583 (14.09.2006 Gazette 2006/37)**

(84) Designated Contracting States:
    **DE GB**

(30) Priority:   **08.03.2005   JP 2005064156**
                **09.09.2005   JP 2005262358**

(71) Applicant: **Konica Minolta Opto, Inc.**
    **Hachioji-shi,**
    **Tokyo 192-8505 (JP)**

(72) Inventors:
    • **IKENAKA, Kiyono**
      **, Hachioji-shi, Tokyo, 1928505 (JP)**
    • **KIMURA, Tohru**
      **, Hachioji-shi, Tokyo, 1928505 (JP)**

    • **NOMURA, Eiji**
      **, Hachioji-shi, Tokyo, 1928505 (JP)**
    • **MORI, Nobuyoshi**
      **, Hachioji-shi, Tokyo, 1928505 (JP)**
    • **SAKAMOTO, Katsuya**
      **, Hachioji-shi, Tokyo, 1928505 (JP)**
    • **HASHIMURA, Junji**
      **, Hachioji-shi, Tokyo, 1928505 (JP)**
    • **OTA, Kohei**
      **, Hachioji-shi, Tokyo, 1928505 (JP)**

(74) Representative: **Roberts, Mark Peter**
    **J.A. Kemp & Co.**
    **14 South Square**
    **Gray's Inn**
    **London WC1R 5JJ (GB)**

(54)    **OPTICAL PICKUP DEVICE AND, OBJECTIVE OPTICAL UNIT AND OBJECTIVE OPTICAL SYSTEM DESIGNING METHOD**

(57)    An optical pickup device comprising a first light source for outputting a first light beam, a second light source for outputting a second light beam, a third light source for outputting a third light beam, and an objective optical unit having an annular-structure first light path difference imparting structure and an annular-structure second light path difference imparting structure, wherein the magnifications of the objective optical unit when the first, second and third beams are incident to the objective optical unit are almost the same, the first light path difference imparting structure imparts a specified light path difference to the first light beam, and changes the spherical aberrations of all the first light beam, second light beam and third light beam to one of under and over directions, the second light path difference imparting structure imparts a specified light path difference to the first light beam, and changes the spherical aberration of only the second light beam out of the first light beam, second light beam and third light beam to the other direction different from the one of under and over directions.

FIG. 1

**EP 1 858 012 A1**

**Description**

**TECHNICAL FIELD**

The present invention relates to an optical pickup device and an objective optical unit, and particularly to the optical pickup device which can adequately record and/or reproduce information on each of different optical information recording media by using different wavelength light sources, and the objective optical unit used for it.

**BACKGROUND ART**

Recently, the research and development of the high density optical disk system by which the recording and/or reproducing of the information can be conducted by using a blue-violet semiconductor laser of the wavelength of about 400 nm, are rapidly advanced. As an example, so-called Bluray Disc (hereinafter, called BD) is an optical disk which conducts the information recording and/or reproducing under the specification of NA 0.85 and a light source wavelength of 405 nm, and it can record the information of 23 - 27 GB per 1-layer of an optical disk with a diameter of 10 cm which is same size to DVD (NA 0.6, light source wavelength 650 nm, memory capacity 4.7 GB). Further, so-called HD DVD (hereinafter, called HD) is an optical disk which conducts the information recording and/or reproducing under the specification of NA 0.65 and the optical source wavelength 405 nm, and it can record the information of 15 to 20 GB per 1-layer of an optical disk with a diameter of 12 cm.

Hereupon, the coma generated due to the skew of the optical disk increases in BD. So the protective layer is designed so as to be thinner than in the case of DVD (the protective layer thickness is 0.1 mm, while the protective layer thickness of DVD is 0.6 mm) to decrease the coma amount due to the skew. Hereinafter, such an optical disk is called a "high density optical disk".

Hereupon, an optical disk player and/or recorder which records and/or reproduces information adequately on only such a type of high density optical disk is not considered valuable enough as a product of the optical disk player and/or recorder. Considering the actuality that DVD in which a great variety of information is recorded is in the present market, it is not enough as a performance of the optical disk player and/or recorder that the information can be recorded and/or reproduced only for the high density optical disk. For example, realizing adequately recording and/or reproducing information also for DVD which users already have, introduces high commercial value of the optical disk player and/or recorder for the high density optical disk. From such a background, it is desired that the optical pickup device mounted in the optical disk player and/or recorder for the high density optical disk having the performance to adequately record and/or reproduce information for any one of the high density optical disk and DVD with maintaining maintains compatibility.

As a method to record and/or reproduce information adequately for any one of the high density optical disk and DVD with maintaining compatibility, it is considered that an optical system for the high density optical disk and an optical system for DVD are switched selectively according to a recording density of the optical disk. However, it has disadvantage for the size reduction and it increase its cost because it requires a plurality of optical systems.

Accordingly, in order to intend that the structure of the optical pickup device is simplified and the cost is reduced, it is preferable that optical pickup device having the compatibility also has a optical system used in common for the high density optical disk and the optical system for DVD to reduce the number of optical parts provided with the optical pickup device at most. Then, using the objective lens arranged to face the optical disk as a common lens and forming the objective lens as a single lens make most advantageous for the simplification and the cost reduction. Hereupon, as the objective lens used in common to a plural kinds of optical disks in which the recording and/or reproducing wavelengths are mutually different, there is well known the objective lens having a diffractive structure with the wavelength dependency of the spherical aberration formed on its surface, and correcting a spherical aberration due to a difference of information recording and/or thickness using the wavelength dependency of the diffractive structure.

Herein, the Patent Document 1 discloses an objective lens of a single lens composition compatibly recording and/or reproducing information for the high density optical disk and DVD.

Hereupon, the objective lens disclosed in Patent Document 1 has the diffractive structure which generates the second-order diffracted light flux to the blue violet laser light flux, and generates the first-order diffracted light flux to the red laser light for DVD, and corrects the spherical aberration due to the difference between the protective layer thicknesses of the high density optical disk and DVD by the diffractive action of such a diffractive structure. This objective lens is a single lens composition, and it allows producing the objective lens in low cost. Although, it has a problem which will be described below.

Specifically, there is a problem that the wavelength dependency generated by the diffractive structure is large. In such a case, it is difficult to use the laser light source whose oscillation wavelength is shifted from the designed wavelength. Because it requires selection of the laser light source, the production cost of the optical pickup device increases. The diffraction angle of the diffracted light flux is expressed by "the diffraction order x wavelength/the diffraction pitch". In order to realize a compatibility between optical information recording media whose using wavelengths are mutually different, it is necessary to provide a predetermined diffraction angle difference among using wavelengths. The above described "selection problem of the laser light source" is caused by a diffractive structure in which values of "the diffraction order x wavelength" are almost the same between wavelengths used fo the high density optical disk and DVD. In the objective lens disclosed in the Patent Document, a ratio of "the diffraction order x wavelength" of the blue violet laser light flux to the red laser light flux is 810/655 = 1.24 and it is close to 1 (hereupon, the unit of the wavelength is nm). It requires smaller diffraction pitch in order to obtain the diffraction angle difference necessary to correct the spherical aberration due to the difference of the protective layer thickness between the high density optical information recording medium and DVD. Therefore, the wavelength dependency of the spherical aberration of the diffractive structure becomes large, and as described above, "the selection problem of the laser light source" is actualized.

To such a problem, a method so as to drive the optical element in the optical axis direction corresponding to the using laser light source is developed. However, a new problem is generated such that the driving structure is necessary and it increase the size of the optical pickup device.

Patent Document 1: JP-A No. 2004-79146

## DISCLOSURE OF INVENTION

The present invention is attained in view of the above problem, and an object of the present invention is to provide an optical pickup device by which, although it is compact, the recording and/or reproducing of the information can be finely conducted on the different kinds of optical information recording media, and an objective optical unit used for it.

A structure according to the present invention is an optical pickup device includes: a first light source for emitting a first light flux with a wavelength $\lambda 1$ for making a converged light spot on an information recording surface of a first optical information recording media having a protective layer with a thickens t1; a second light source for emitting a second light flux with a wavelength $\lambda 2$ for making a converged light spot on an information recording surface of a second optical information recording media having a protective layer with a thickens t2; a third light source for emitting a third light flux with a wavelength $\lambda 3$ for making a converged light spot on an information recording surface of a third optical information recording media having a protective layer with a thickens t3; and an objective optical unit having a first optical path difference providing structure formed by a plurality of ring-shaped zones and a second optical path difference providing structure formed by a plurality of ring-shaped zones. Magnifications of the objective optical unit when the first, second, and third light fluxes enters into the objective optical unit have almost same value. The first optical path difference providing structure provides a predefined optical path difference to the first light flux passing through adjoining ring-shaped zones and changes a spherical aberration to be one of under-correction and over-correction for all of the first, second, and third light fluxes. The second optical path difference providing structure provides a predefined optical path difference to the first light flux passing through adjoining ring-shaped zones and changes a spherical aberration to be the other of under-correction and over-correction of the spherical aberration only for the second light flux among the first, second and third light fluxes.

## BRIEF DESCRIPTION OF DRAWINGS

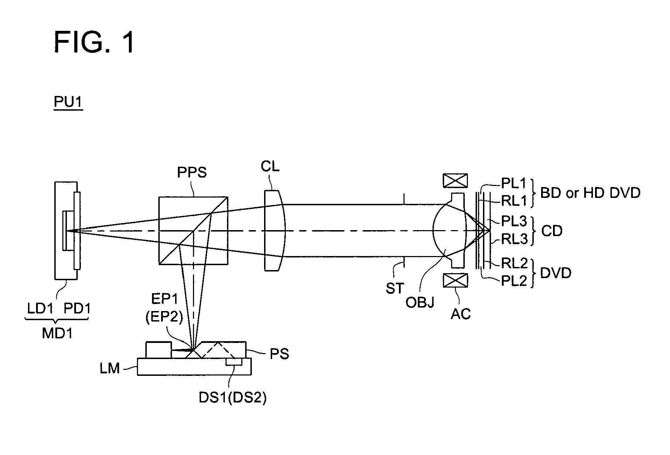

Fig. 1 is a view schematically showing the structure of the optical pickup device of the present embodiment.

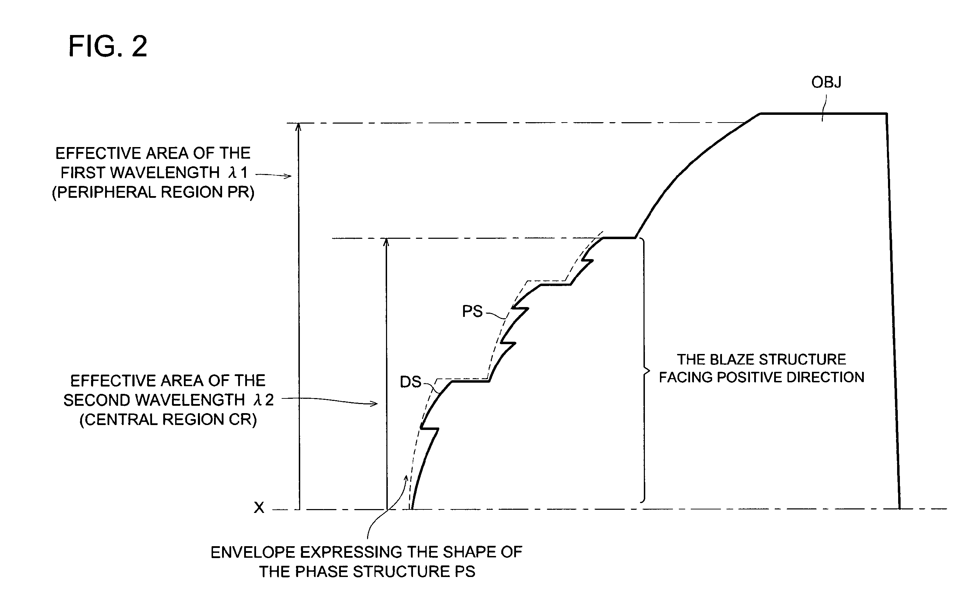

Fig. 2 is a sectional view of an example of the objective lens OBJ in which the diffractive structure as the first optical path difference providing structure and a phase structure as the second optical path difference providing structure are formed on the optical surface on the light source side.

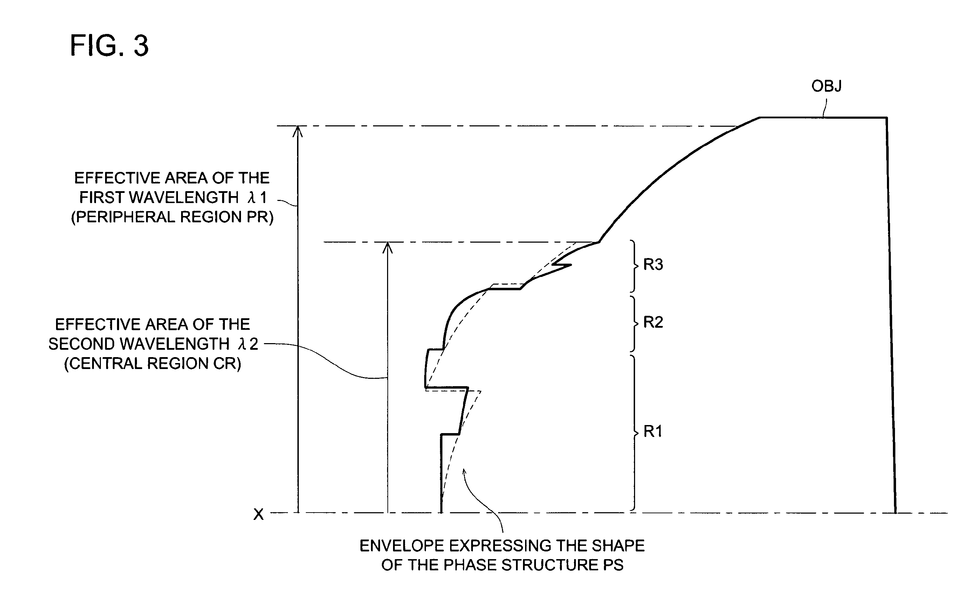

Fig. 3 is a sectional view of another example of the objective lens OBJ in which the diffractive structure as the first optical path difference providing structure and a phase structure as the second optical path difference providing structure are formed on the optical surface on the light source side.

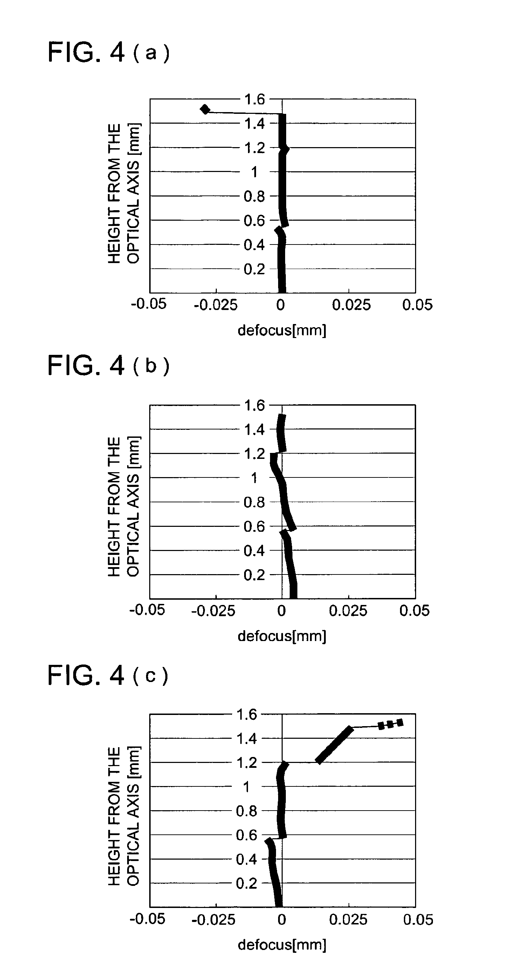

Fig. 4(a) is a view showing the relationship between the height from the optical axis at the time of use of HD DVD and the defocus amount in example 1, Fig. 4(b) is a view showing the relationship between the height from the optical axis at the time of use of DVD and the defocus amount in example 1, and Fig. 4(c) is a view showing the relationship between the height from the optical axis at the time of use of CD and the defocus amount in example 1.

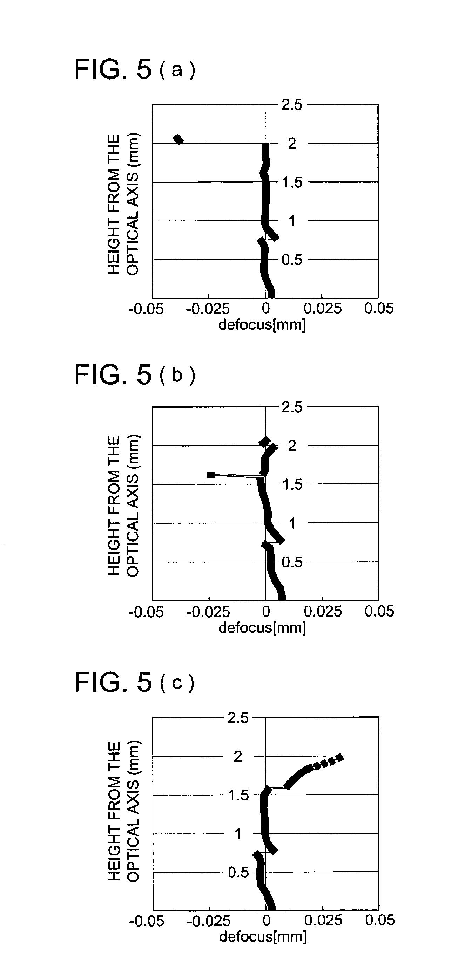

Fig. 5(a) is a view showing the relationship between the height from the optical axis at the time of use of HD DVD and the defocus amount in example 2, Fig. 5(b) is a view showing the relationship between the height from the optical axis at the time of use of DVD and the defocus amount in example 2, and Fig. 5(c) is a view showing the relationship between the height from the optical axis at the time of use of CD and the defocus amount in example 2.

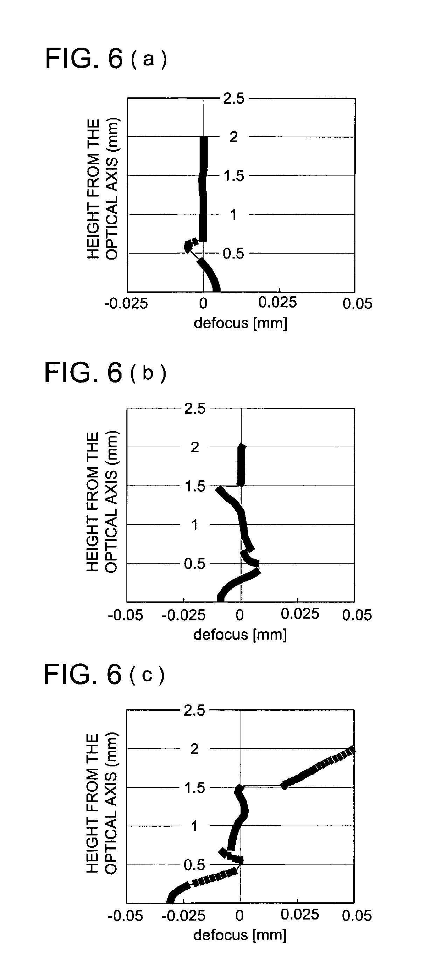

Fig. 6(a) is a view showing the relationship between the height from the optical axis at the time of use of HD DVD and the defocus amount in example 3, Fig. 6(b) is a view showing the relationship between the height from the optical axis at the time of use of DVD and the defocus amount in example 3, and Fig. 6(c) is a view showing the relationship between the height from the optical axis at the time of use of CD and the defocus amount in example 3.

**BEST MODE FOR CARRYING OUT THE INVENTION**

The proffered embodiments according to the present invention are described below.

Item 1 is an optical pickup device including: a first light source for emitting a first light flux with a wavelength $\lambda 1$ for making a converged light spot on an information recording surface of a first optical information recording media having a protective layer with a thickens t1; a second light source for emitting a second light flux with a wavelength $\lambda 2$ ($\lambda 1 < \lambda 2$) for making a converged light spot on an information recording surface of a second optical information recording media having a protective layer with a thickens t2 (t1 $\leq$ t2); a third light source for emitting a third light flux with a wavelength $\lambda 3$ (1.9 x $\lambda 1 < \lambda 3 < 2.1$ x $\lambda 1$) for making a converged light spot on an information recording surface of a third optical information recording media having a protective layer with a thickens t3 (t2 < t3); and an objective optical unit having a first optical path difference providing structure formed by a plurality of ring-shaped zones and a second optical path difference providing structure formed by a plurality of ring-shaped zones. When m1 is a magnification of the objective optical unit for the first light flux entering into the objective optical unit, m2 is a magnification of the objective optical unit for the second light flux entering into the objective optical unit, and m3 is a magnification of the objective optical unit for the third light flux, m1, m2 and m3 have almost same value. The first optical path difference providing structure provides an optical path difference equivalent to odd times of the wavelength $\lambda 1$ to the first light flux passing through adjoining ring-shaped zones, and changes a spherical aberration to be one of under-correction and over-correction for all of the first light flux, the second light flux, and the third light flux. The second optical path difference providing structure provides an optical path difference equivalent to even times of the wavelength $\lambda 1$ to the first light flux passing through adjoining ring-shaped zones, and changes a spherical aberration to be the other of under-correction and over-correction of the spherical aberration only for the second light flux among the first, second, and third light fluxes.

For example, values of m1, m2 and m3 may satisfy the following expressions (1), (2), and (3) respectively.

$$-0.02 < m1 < 0.02 \qquad (1)$$

$$-0.02 < m2 < 0.02 \qquad (2)$$

$$-0.02 < m3 < 0.02 \qquad (3)$$

Herein, the objective optical unit may include a plurality of optical elements or may be an objective optical element formed by single lens.

In the optical pickup device, it is preferable that the first optical path difference providing structure provides an optical path difference being odd times of the wavelength $\lambda 1$ to the first light flux passing through adjoining ring-shaped zones, and changes a spherical aberration to be under-correction for all of the first light flux, the second light flux, and the third light flux. It is also preferable that the second optical path difference providing structure provides an optical path difference being even times of the wavelength $\lambda 1$ to the first light flux passing through adjoining ring-shaped zones, and changes a spherical aberration to be over-correction of the spherical aberration only for the second light flux among the first light flux, the second light flux, and the third light flux.

Item 2 is the optical pickup device written in item 1, satisfying the following expressions (5) and (6).

$$m1 - 0.02 < m2 < m1 + 0.02 \qquad (5)$$

$$m1 - 0.02 < m3 < m1 + 0.02 \qquad (6)$$

Item 3 is the optical pickup device written in item 1 or 2, in which each of the magnifications m1, m2, and m3 of the objective optical unit is almost zero.

Item 4 is the optical pickup device written in one of items 1 - 3, satisfying the expressions (1), (2) and (3).

The structure according to the present invention is a structure by which the recording and/or reproducing of the information is adequately conducted on 3 different optical information recording media by a new combination of the diffraction and magnification. That is, in order to compensate the defects of the optical path difference providing structure of the diffractive structure which is conventionally used, the problem is intended to be solved by further correcting its performance by using another optical path difference providing structure.

Initially, it is difficult to form a light converged spot without aberration for any optical information recording medium using by only a base aspheric surface on the optical functional surface of the objective optical unit. So the aberration is corrected by a combination of the base aspheric surface and 2 optical path difference providing structures.

The first optical path difference providing structure is designed so that it adequately corrects aberration for the first light flux and the third light flux which are refracted by the base aspheric surface. Further, when the third wavelength is close to the even times of the first wavelength, in order to make differ the action for the first light flux and the third light flux, the optical path difference equivalent to the odd times of the first light flux is given to the first light flux. Then, it provides the optical path difference whose length is shifted by half-wavelength to third light flux based on the wavelength difference and makes the optical action to the first light flux and the third light flux differ. It allows correcting adequately the spherical aberrations due to the difference of thickness of protective layers respectively. Then, the ring-shaped zone pitch is set appropriately so as to provide an action changing the spherical aberration to under-correction. It allows forming the fine converged light spot for the first light flux and the third light flux such that for example protective layer thickness is different, by using a combination of the refractive power owned by the objective optical unit itself and the function of the first optical path difference providing structure.

Hereupon, designing the first optical path difference providing structure in this manner allows providing an action changing the spherical aberration excessively under-correction to the second light flux. So the combination of the refractive power owned by the objective optical unit itself has a possibility that the fine light converged spot can not be formed. Accordingly, by distributing an action so as to cancel out the excessive correction to the second optical path difference providing structure, this system is made so that the recording and/or reproducing of the information can be adequately conducted on also any optical information recording medium.

However, it is necessary to avoid affecting of the bad influence of the second optical path difference providing structure upon the first flux and the third light flux in which a good wavefront is formed by the combination of the first optical path difference providing structure and the refractive power. Accordingly, the second optical path difference providing structure is provided so as to provide the optical path difference of even times of wavelength $\lambda 1$ to the first light flux, and thereby, it does not change phase of the wavefront of the first light flux. Further, when the third light flux has the wavelength of almost even times of the first light flux, the second optical path difference providing structure is provided so as to provide the optical path difference of even times of wavelength $\lambda 1$ to the first light flux, it also does not change phase of the wavefront. Hereupon, it is preferable that the ring-shaped zone pitch is adjusted so as not to provide an action bending the ray of light to light fluxes with the wavelength $\lambda 1$ and the wavelength $\lambda 3$. Such a structure provides an advantage that the first light flux and the third light flux are not influenced upon the light convergence by the second optical path difference providing structure. Hereupon, "equivalent to even times" means a range which is $(2n - 0.1) \times \lambda 1$ or more and $(2n + 0.1) \times \lambda 1$ or less, where n is a natural number. Further, "equivalent odd times" means a range which is $\{(2n - 1) - 0.1\} \times \lambda 1$ or more and $\{(2n - 1) + 0.1\} \times \lambda 1$ or less, where n is a natural number.

Even when such a limitation is provided, the optical path difference structure can be designed so that a desired action is given to the second light flux. Herein, in order to cancel the spherical aberration which is excessively changed to the under-correction by the first optical path difference providing structure, the second optical path difference providing structure can be designed so as to give the action to change the spherical aberration to the over-correction. When such a structure is provided, the second light flux can form a good converged light spot in each optical information recording medium by 3 combinations of the refractive function of the objective optical unit, the function of the first optical path difference providing structure, and the function of the second optical path difference providing structure.

Further, when the incident light flux magnifications m1, m2, m3 on the objective optical unit of the first light flux, second light flux, and third light flux are made so as to respectively satisfy the relational expressions (1), (2), and (3), the infinite parallel light flux enters into the objective optical unit. Such an objective optical unit has good operability as an optical pickup device and is preferably used particularly for the writing system or high speed type of information recording and/or reproducing apparatus because it suppress generating coma when the objective optical unit is moved for tracking.

Item 5 is the optical pickup device written in any one of items 1 - 4, in which when the first light flux enters into the objective optical unit, a combination of a refractive function of the objective optical unit and an optical function provided by the first optical path difference providing structure makes a converged light spot on the information recording surface of the first optical information recording medium, when the second light flux enters into the objective optical element, a combination of a refractive function of the objective optical element and an optical function provided by the first optical path difference providing structure, and an optical function provided by the second optical path difference providing structure makes a converged light spot on the information recording surface of the second optical information recording medium, and when the third light flux enters into the objective optical element, a combination of a refractive function of the objective optical element and an optical function provided by the first optical path difference providing structure makes a converged light spot on the information recording surface of the third optical information recording medium.

Item 6 is the optical pickup device written in one of items 1 - 5, in which the first optical path difference providing structure and the second optical path difference providing structure are formed to be superimposed each other and arranged on a same optical surface in the objective optical unit.

Item 7 is the optical pickup device written in item 6 in which the optical surface having the first optical path difference providing structure and the second first optical path difference providing structure is arranged closest position to a light source side. It can suppress the eclipse of the ray of the light from the reason that the parallel light enters on the optical path difference providing structures.

Item 8 is the optical pickup device written in one of items 1 - 7, in which the objective optical unit includes an optical functional surface having a central region including an optical axis and a peripheral region surrounding the central region. The central region includes the first optical path difference providing structure and the second optical path difference providing structure. The central region is used for making a converged light spot on each of information recording surfaces of the first optical information recording medium, the second optical information recording medium, and the third optical information recording medium. The peripheral region is used for making a converged light spot on each of information recording surfaces only of the first optical information recording medium and the second optical information recording medium among the first to third optical information recording media.

Fig. 2 is a sectional view of an example of the objective lens OBJ having the diffractive structure as the first optical path difference providing structure and the phase structure as the second optical path difference providing structure formed on the optical surface on the light source side of the objective lens. For easy understanding, the diffractive structure DS and the phase structure PS are exaggeratedly drawn. The first light flux and the second light flux commonly pass the central region CR, and only the first light flux passes the peripheral region PR. In Fig. 2, the diffractive structure DS has a cross section centering around the optical axis X shown by a solid line and the cross section is blaze shape. Because the diffractive structure DS is superimposed on the phase structure PS, it is structured like that it is locally displaced in the axis direction. In the example shown in Fig. 2, because the diffractive structure DS includes only the blaze structure facing the positive direction, the envelope (dotted line shown by Fig. 2) showing the shape of the phase structure PS is drawn when top of the blaze is connected. Hereupon, the blaze structure facing the negative direction as the diffractive structure DS may be mixed.

Fig. 3 is a sectional view of another example of the objective lens OBJ having the diffractive structure as the first optical path difference providing structure, and the phase structure as the second optical path difference providing structure formed on the optical surface on the light source side of the the objective lens. For easy understanding, the surface shape is exaggeratedly drawn. In the objective lens OBJ shown in Fig. 3, the central region CR is formed of the first region R1 including the optical axis, the second region R2 around that, and the third region R3 which is furthermore around that and tangential to the peripheral region PR. Herein, because the blaze structure facing the negative direction and the phase structure are superimposed in the first region R1, the envelope (dotted line shown in Fig. 3) showing the shape of the phase structure PS is formed when the bottom portions of the ring-shaped zone groove are connected. In the third region R3, because the blaze structure facing the positive direction and the phase structure are superimposed, the envelope (dotted line shown in Fig. 3) showing the shape of the phase structure PS is formed when the tops of the blaze are connected. The second region R2 is a transient region necessary for switching the blaze structure facing the negative direction to the blaze structure facing the positive direction. This transient region is a region corresponding to the inflection point of the optical path difference function when the optical path difference added to the transmitted wavefront by the diffractive structure, is expressed by the optical path difference function. When optical path difference function has the inflection point, the inclination of the optical path difference function becomes small. So the ring-shaped zone pitch can be expanded, and it suppresses reducing the transmission factor due to the shape error of the diffractive structure.

Hereupon, when the direction of the blaze structure is switched once from the negative direction to the positive direction according as it is separated from the optical axis, it is preferable that the shape of the phase structure is formed into the shape be displaced in the optical axis direction (dotted line shown in Fig. 3) such that the optical path length becomes long according as it is separated from the optical axis to a predetermined height in the central region, and the optical path length becomes short according as it is separated from the optical axis from the outside of the predetermined height, as shown in Fig. 3. In this case, it is more preferable that the positions of 70% of the height in the central region are included in the ring-shaped zone whose optical path length is longest in the ring-shaped zones of the phase structure.

In the above optical pickup device, the objective optical unit may have an outer peripheral region surrounding the peripheral region, and the first light flux passing through the outer peripheral region may be used for making a converged light spot on the information recording surface of the first optical information recording medium. Therefore, it can be adopted to the first optical information recording medium with a high numerical aperture.

Furthermore, the outer peripheral region may have an optical path difference providing structure which makes the second and third light fluxes passing through the outer peripheral region to flare light. Therefore, it gives efficiency as an aperture stop to the objective optical unit.

Item 9 is optical pickup device written in one of items 1- 8, in which the first optical path difference providing structure is a serrated diffractive structure. "Serrated diffractive structure" is a structure such that, for example, at least one optical functional surface is divided into a plurality of optical function regions centered to the optical axis, at least one of the plurality of optical function regions is divided into a plurality of ring-shaped zones centered to the optical axis, each of the plurality of ring-shaped zones has a predefined number of discontinuous steps, and each of the plurality of ring-shaped zones has a cross section along the optical axis in a serrated shape.

Item 10 is the optical pickup device written in item 9, in which when the first optical path difference providing structure is a diffractive structure, a mean step amount d1 of the ring-shaped zones of the diffractive structure in a parallel direction to an optical axis satisfies a following expression:

$$MOD(d1 \times (n1 - 1) / \lambda1) \times \lambda1 < MOD(d1 \times (n2 - 1) / \lambda2) \times \lambda2,$$

where $MOD(\alpha)$ is an integer value closest to $\alpha$,
n1 is a refractive index of a material forming the first optical path difference providing structure for the wavelength $\lambda1$,
n2 is a refractive index of a material forming the first optical path difference providing structure for the wavelength $\lambda2$, and
d1 represents a following expression when m is a number of the ring-shaped zones, and each of D1, D2, and D3... is a step amount of each of the ring-shaped zones:

$$d1 = (D1 + D2 + D3...)/m.$$

At this time, the optical pickup device satisfies the following expression when the number of diffraction order of the diffracted light flux of the first light flux which is generated by the diffractive structure and which forms the light converged spot is K1 and the number of diffraction order of the diffracted light flux of the second light flux is K2, and the refractive index to the wavelength $\lambda1$ of the glass material composing the objective optical unit is n1, and the refractive index to the wavelength $\lambda2$ is n2.

$$(K1 \cdot \lambda1)/(n1 - 1) < (K2 \cdot \lambda2)/(n2 - 1) \quad (4)$$

Where, K1, K2 are both positive integers.

According to the present structure, the spherical aberration correction can be excessively conducted to the second light flux rather than to the first light flux.

Item 11 is the optical pickup device written in item 9, in which a mean step amount d2 of the ring-shaped zones of the first optical path difference providing structure in a parallel direction to an optical axis satisfies a following expression:

$$1 \leq d2 \times (n1 - 1) / \lambda1 < 1.5,$$

where n1 is a refractive index of a material forming the first optical path difference providing structure for the wavelength $\lambda1$, and
d2 represents a following expression when m is a number of the ring-shaped zones, and each of D1, D2, and D3... is a step amount of each of the ring-shaped zones:

$$d2 = (D1 + D2 + D3...)/m.$$

At that time, the first-order diffracted light flux of the first light flux passed the first optical path difference providing structure has a highest light amount, and the first-order diffracted light flux of the second light flux passed the first optical path difference providing structure has a highest light amount, and the first-order diffracted light flux of the third light flux passed the first optical path difference providing structure has a highest light amount.

Item 12 is the optical pickup device written in any one of items 9 - 11, in which the first optical path difference providing structure satisfies a following expression:

$$MOD(d2 \times (n1 - 1) / \lambda1) = 3,$$

where MOD($\alpha$) is an integer value closest to $\alpha$, n1 is a refractive index of a material forming the first optical path difference providing structure for the wavelength $\lambda1$,
d2 is an mean step amount of the plurality of ring-shaped zones of the first optical path difference providing structure in a parallel direction to an optical axis, and satisfies

$$d2 = (D1 + D2 + D3...)/m,$$

m is a number of the plurality of ring-shaped zones,
each of D1, D2, and D3... is a step amount of each of the plurality of ring-shaped zones.

At that time, the 3rd-order diffracted light flux of the first light flux passed the first optical path difference providing structure has a highest light amount, and the 2nd-order diffracted light flux of the second light flux passed the first optical path difference providing structure has a highest light amount, and the 2nd-order diffracted light flux of the third light flux passed the first optical path difference providing structure has a highest light amount.

Otherwise, the 3rd-order diffracted light flux of the first light flux passed the first optical path difference providing structure has a highest light amount, the 2nd-order diffracted light flux of the second light flux passed the first optical path difference providing structure has a highest light amount, and the first-order diffracted light flux of the third light flux passed the first optical path difference providing structure has a highest light amount.

Item 13 is the optical pickup device written in any one of items 1 - 8, the first optical path difference providing structure is a NPS (Non-Periodic Phase Structure).

Item 14 is the optical pickup device written in any one of items 1 - 13, in which the second optical path difference providing structure is a serrated diffractive structure.

Item 15 is the optical pickup device written in item 14, in which a mean step amount d3 of the ring-shaped zones of the second optical path difference providing structure in a parallel direction to an optical axis satisfies a following expression:

$$MOD(d3 \times (n1' - 1) / \lambda1) = 2,$$

where MOD($\alpha$) is an integer value closest to $\alpha$,
n1' is a refractive index of a material forming the second optical path difference providing structure for the wavelength $\lambda1$, and
d3 represents a following expression when m is a number of the ring-shaped zones, and each of D1, D2, and D3... is a step amount of each of the ring-shaped zones:

$$d3 = (D1 + D2 + D3...)/m..$$

At this time, the second-order diffracted light flux of the first light flux passed the second optical path difference providing structure has the highest light amount, the first-order diffracted light flux of the second light flux passed the second optical path difference providing structure has the highest light amount, and the first-order diffracted light flux of the third light flux passed the second optical path difference providing structure has the highest light amount.

Item 16 is the optical pickup device written in any one of items 1 - 13, in which the second optical path difference providing structure is a superimposed type diffractive structure having a plurality of patterns concentrically arranged therein, each of the plurality of patterns has a cross section including an optical axis with a stepped shape having a plurality of levels, and each step of the stepped shape is shifted per a predefined number of the levels by a height of steps corresponding to the predefined number of levels.

The "superimposed type diffractive structure" means a structure whose optical functional surface includes a plurality of diffractive periodic structures centered to the optical axis and each of the plurality of diffractive periodic structures is formed such that the predefined number of discontinuous steps along the optical axis and the predefined number of ring-shaped zones centered to the optical axis are periodically arranged. The superimposed type diffractive structure is called also a multi-level structure or DOE structure. For example, the diffractive structure is a structure in which the optical functional surface of the optical element is divided into a plurality of ring-shaped zones around the optical axis and this ring-shaped zone is respectively formed into serrated structures. One serrated portion of the serrated structures has the predetermined number of step-shapes. Hereby, the diffractive action having the wavelength selectivity can be given to the optical element. Hereupon, the number of steps of the step shape or the height of step, its width can be appropriately designed.

As the second optical path difference providing structure, the so-called wavelength selective diffractive structure in which the step-like shape is repeated can also be used. In the case of this structure, the diffractive action is given only to a certain specific wavelength, and the light flux with other wavelength can pass through the structure as it is. Herein, because the wavelength $\lambda 3$ is about 2 times of the wavelength $\lambda 1$, when the structure transmits the third light flux with the wavelength $\lambda 3$ as it is, it also transmits the first light flux of the wavelength $\lambda 1$ as it is. So, the diffractive action can be given only to the second light flux with the wavelength $\lambda 2$.

Item 17 is the optical pickup device written in item 16, in which a mean step amount d4 of ring-shaped zones of the patterns of the second optical path difference providing structure in a parallel direction to an optical axis satisfies a following expression:

$$\mathrm{MOD(d4 \ x \ (n1' \ - \ 1) \ / \ \lambda1) \ = \ 2k,}$$

where $\mathrm{MOD}(\alpha)$ is an integer value closest to $\alpha$,
n1' is a refractive index of a material forming the second optical path difference providing structure for the wavelength $\lambda 1$, and
d4 represents a following expression when m is a number of the ring-shaped zones, and each of D1, D2, and D3... is a step amount of each of the ring-shaped zones:

$$\mathrm{d4 \ = \ (D1 \ + \ D2 \ + \ D3...)/m.}$$

At this time, the 0th order diffracted light flux of the first light flux passed the second optical path difference providing structure has the highest light amount, the first-order diffracted light flux of the second light flux passed the second optical path difference providing structure has the highest light amount, and the 0-order diffracted light flux of the third light flux passed the second optical path difference providing structure has the highest light amount.

Item 18 is the optical pickup device written in item 16, in which the levels formed in each of the plurality of patterns are formed along a base aspheric surface of the objective optical unit.

In the above structure, it is preferable that the second-order diffracted light flux of the first light flux passed the second optical path difference providing structure has the highest light amount, the first-order diffracted light flux of the second light flux passed the second optical path difference providing structure has the highest light amount, and the first-order diffracted light flux of the third light flux passed the second optical path difference providing structure has the highest light amount.

Similarly, as for the above structure, it is preferable that the Oth-order diffracted light flux of the first light flux passed the second optical path difference providing structure has the highest light amount, the first-order diffracted light flux of the second light flux passed the second optical path difference providing structure has the highest light amount, and the 0-order diffracted light flux of the third light flux passed the second optical path difference providing structure has the highest light amount.

Item 19 is the optical pickup device written in any one of items 1 - 13, in which the second optical path difference providing structure is NPS (Non-Periodic Phase Structure).

NPS can also be used as the second optical path difference providing structure in the above structure. NPS means a structure so as to align the wavefront as though the structure does not have aberration by providing phase difference to a light flux passing through the structure. In this structure, the spherical aberration is not necessarily corrected. NPS has a ring-shaped zone having steps around the optical axis and each of the steps is formed so as to provide an optical path difference being even times of the wavelength $\lambda 1$ to the first light flux with the wavelength $\lambda 1$. Hereby, the structure does not have influence on the wavefront of the first light flux. Then, the step difference providing an optical path difference being even times of the wavelength $\lambda 1$ also does not have influence on the wavefront to the third light flux because it provides an optical path difference being integer times of the wavelength $\lambda 3$ to the light flux with the wavelength $\lambda 3$. The second light flux changes its wavefront by passing through NPS because of its wavelength difference against the wavelength $\lambda 1$ and the wavelength $\lambda 2$. It can be used for making a converged spot with a good wavefront condition. NPS can also control the way to change the wavefront by adjusting interval of its ring-shaped zones. "Even times equivalent" means a range which is $(2n - 0.1) \times \lambda 1$ or more, and is $(2n + 0.1) \times \lambda 1$ or less, where n is made natural number.

Item 20 is the optical pickup device written in any one of items 1 - 19, satisfies the wavelength λ1 is 380 nm < λ1 < 420 nm, the wavelength λ2 is 630 nm < λ2 < 680 nm, the wavelength λ3 is 760 nm < λ3 < 830 nm, the protective layer thickness t1 of the first optical information recording medium is 0.0875 mm ≤ t1 ≤ 0.1125 mm, the protective layer thickness t2 of the second optical information recording medium is 0.5 mm ≤ t2 ≤ 0.7 mm, and the protective layer thickness t3 of the third optical information recording medium is 1.1 mm ≤ t3 ≤ 1.3 mm.

Item 21 is the optical pickup device written in any one of items 1 - 19, satisfies the wavelength λ1 is 380 nm < λ1 < 420 nm, the wavelength λ2 is 630 nm < λ2 < 680 nm, the wavelength λ3 is 760 nm < λ3 < 830 nm, the protective layer thickness t1 of the first optical information recording medium is 0.5 mm ≤ t1 ≤ 0.7 mm, the protective layer thickness t2 of the second optical information recording medium is 0.5 mm ≤ t2 ≤ 0.7 mm, and the protective layer thickness t3 of the third optical information recording medium is 1.1 mm ≤ t3 ≤ 1.3 mm.

Taking into the consideration the deterioration of the light source, the above optical system generally is designed such that the wavelengths λ1, λ2, and λ3 and the protective layer thicknesses t1, t2, and t3 satisfy the above conditional expressions.

In the above structure, the following relationship is preferably established between the wavelength λ1 and the wavelength λ2.

$$1.5 \times \lambda1 < \lambda2 < 1.7 \times \lambda1 \qquad\qquad (5)$$

Item 22 is the optical pickup device written in any one of items 1 - 21, in which the material of the objective optical unit is glass.

Item 23 is the optical pickup device written in any one of items 1 - 21, in which the material of the objective optical unit is plastic.

Further, the materials of the objective optical unit may be glass or plastic.

Item 24 is the objective optical unit including a first optical path difference providing structure formed by a plurality of ring-shaped zones; and a second optical path difference providing structure formed by a plurality of ring-shaped zones. When a first light flux with a wavelength λ1 enters into the objective optical unit with a magnification M and converges on an information recording surface of a first optical information recording medium having a protective layer with a thickness t1, a second light flux with a wavelength λ2 (λ1 < λ2) enters into the objective optical unit with a magnification M and converges on an information recording surface of a second optical information recording medium having a protective layer with a thickness t2 (t1 ≤ t2), and a third light flux with a wavelength λ3 (1.9 x λ1 < λ3 < 2.1 x λ1) enters into the objective optical unit with a magnification M and converges on an information recording surface of a third optical information recording medium having a protective layer with a thickness t3 (t2 ≤ t3), the first optical path difference providing structure provides an optical path difference equivalent to odd times of the wavelength λ1 to the first light flux passing through adjoining ring-shaped zones, and changes a spherical aberration to be one of under-correction and over-correction of the spherical aberration for all of the first light flux, the second light flux, and the third light flux, and the second optical path difference providing structure provides an optical path difference equivalent to even times of the wavelength λ1 to the first light flux passing through adjoining ring-shaped zones, changes a spherical aberration to the other of under-correction and over-correction of the spherical aberration only for the second light flux among the first to third light fluxes.

Item 25 is the optical pickup device written in item 24, the magnification M of the objective optical unit is almost zero.

Item 26 is the optical pickup device written in item 25, satisfies the expression (7).

$$-0.02 < M < 0.02 \qquad (7)$$

Item 27 is the optical pickup device written in any one of items 24 to 26, in which when the first light flux enters into the objective optical unit, a combination of a refractive function of the objective optical unit and an optical function provided by the first optical path difference providing structure makes a converged light spot on the information recording surface of the first optical information recording medium. When the second light flux enters into the objective optical unit, a combination of a refractive function of the objective optical unit, an optical function provided by the first optical path difference providing structure, and an optical function provided by the second optical path difference providing structure makes a converged light spot on the information recording surface of the second optical information recording medium. When the third light flux enters into the objective optical unit, a combination of a refractive function of the objective optical unit and an optical function provided by the first optical path difference providing structure makes a converged light spot on the information recording surface of the third optical information recording medium.

Item 28 is the optical pickup device written in one of items 24 - 27, in which the first optical path difference providing structure and the second optical path difference providing structure are formed to be superimposed each other and arranged on a same optical surface in the objective optical unit.

Item 29 is the optical pickup device written in item 28, in which the optical surface having the both optical path difference providing structures is arranged a closest position to the first - third light sources.

Item 30 is the optical pickup device written in one of items 24 - 29, in which the objective optical unit further includes an optical functional surface having a central region including an optical axis and a peripheral region surrounding the central region. The central region includes the first optical path difference providing structure and the second optical path difference providing structure. When the first light flux with a wavelength $\lambda$1 enters into the objective optical unit, passes through the central region and the peripheral region, and converges with a magnification M on the information recording surface of the first optical information recording medium having a substrate with a thickness t1, when the second light flux with a wavelength $\lambda$2 ($\lambda$1 < $\lambda$2) enters into the objective optical unit, passes through the central region and the peripheral region, and converges with a magnification M on the information recording surface of the second optical information recording medium having a substrate with a thickness t2 (t1 ≤ t2), and when the third light flux with a wavelength $\lambda$3 (1.9 x $\lambda$1 < $\lambda$3 < 2.1 x $\lambda$1) enters into the objective optical unit, passes through the central region, and converges with a magnification M on the information recording surface of the third optical information recording medium having a substrate with a thickness t3 (t2 < t3), the first optical path difference providing structure provides an optical path difference equivalent to odd times of the wavelength $\lambda$1 to the first light flux passing through adjoining ring-shaped zones, and changes a spherical aberration to be one of under-correction and over-correction for all of the first light flux, the second light flux, and the third light flux. When the first light flux with a wavelength $\lambda$1 enters into the objective optical unit, passes through the central region and the peripheral region, and converges with a magnification M on the information recording surface of the first optical information recording medium having a substrate with a thickness t1, when the second light flux with a wavelength $\lambda$2 enters into the objective optical unit, passes through the central region and the peripheral region, and converges with a magnification M on the information recording surface of the second optical information recording medium having a substrate with a thickness t2, and when the third light flux with a wavelength $\lambda$3 enters into the objective optical unit, passes through the central region, and converges with a magnification M on the information recording surface of the third optical information recording medium having a substrate with a thickness t3, the second optical path difference providing structure provides an optical path difference equivalent to even times of the wavelength $\lambda$1 to the first light flux passing through adjoining ring-shaped zones, and changes a spherical aberration to be the other of under-correction and over-correction of the spherical aberration only for the second light flux among the first to third light fluxes.

Item 31 is the optical pickup device written in any one of items 24 to 30, in which the first optical path difference providing structure is a serrated diffractive structure.

Item 32 is the optical pickup device written in item 31, in which when the first optical path difference providing structure is a diffractive structure, a mean step amount d1 of the ring-shaped zones of the diffractive structure in a parallel direction to an optical axis satisfies a following expression:

$$\text{MOD}(d1 \times (n1 - 1) / \lambda1) \times \lambda1 < \text{MOD}(d1 \times (n2 - 1) / \lambda2) \times \lambda2,$$

where MOD($\alpha$) is an integer value closest to $\alpha$,
n1 is a refractive index of a material forming the first optical path difference providing structure for the wavelength $\lambda$1,
n2 is a refractive index of a material forming the first optical path difference providing structure for the wavelength $\lambda$2, and
d1 represents a following expression when m is a number of the ring-shaped zones, and each of D1, D2, and D3... is a step amount of each of the ring-shaped zones:

$$d1 = (D1 + D2 + D3...)/m.$$

Item 33 is the optical pickup device written in item 31, in which a mean step amount d2 of the ring-shaped zones of the first optical path difference providing structure in a parallel direction to an optical axis satisfies a following expression:

$$1 \leq d2 \times (n1 - 1) / \lambda1 < 1.5,$$

where n1 is a refractive index of a material forming the first optical path difference providing structure for the wavelength λ1, and
d2 represents a following expression when m is a number of the ring-shaped zones, and each of D1, D2, and D3... is a step amount of each of the ring-shaped zones:

$$d2 = (D1 + D2 + D3...)/m.$$

Item 34 is the optical pickup device written in one of items 31 - 33, in which a mean step amount d2 of the ring-shaped zones of the first optical path difference providing structure in a parallel direction to an optical axis satisfies a following expression:

$$MOD(d2 \times (n1 - 1) / \lambda1) = 3,$$

where MOD(α) is an integer value closest to α,
n1 is a refractive index of a material forming the first optical path difference providing structure for the wavelength λ1, and
d2 represents a following expression when m is a number of the ring-shaped zones, and each of D1, D2, and D3... is a step amount of each of the ring-shaped zones:

$$d2 = (D1 + D2 + D3...)/m.$$

Item 35 is the optical pickup device written in one of items 24 - 30, in which the first optical path difference providing structure is a NPS (Non-Periodic Phase Structure).
Item 36 is the optical pickup device written in one of items 24 - 35, in which the second optical path difference providing structure is a serrated diffractive structure.
Item 37 is the optical pickup device written in item 36, in which a mean step amount d3 of the ring-shaped zones of the second optical path difference providing structure in a parallel direction to an optical axis satisfies a following expression:

$$MOD(d3 \times (n1' - 1) / \lambda1) = 2,$$

where MOD(α) is an integer value closest to α,
n1' is a refractive index of a material forming the second optical path difference providing structure for the wavelength λ1, and
d3 represents a following expression when m is a number of the ring-shaped zones, and each of D1, D2, and D3... is a step amount of each of the ring-shaped zones:

$$d3 = (D1 + D2 + D3...)/m.$$

Item 38 is the optical pickup device written in one of items 24 - 35, in which the first optical path difference providing structure is a superimposed type diffractive structure having a plurality of patterns concentrically arranged in the superimposed type diffractive structure. Each of the plurality of patterns has a cross section including an optical axis with a stepped shape having a plurality of levels. Each step of the stepped shape is shifted per a predefined number of the levels by a height of steps corresponding to the predefined number of levels.
Item 39 is the optical pickup device written in item 38, in which the second optical path difference providing structure satisfies a following expression:

$$MOD(d4 \times (n1' - 1) / \lambda1) = 2k,$$

where MOD($\alpha$) is an integer value closest to $\alpha$,

n1' is a refractive index of a material forming the second optical path difference providing structure for the wavelength $\lambda1$,

d4 is an mean step amount of the plurality of ring-shaped zones in a parallel direction to an optical axis in the plurality of patterns of the second optical path difference providing structure, and satisfies

$$d4 = (D1 + D2 + D3...)/m,$$

m is a number of the plurality of ring-shaped zones,

each of D1, D2, and D3... is a step amount of each of the plurality of ring-shaped zones.

Item 40 is the optical pickup device written in item 38, in which the levels in each of the plurality of patterns are formed along a base aspheric surface of the objective optical unit.

Item 41 is the optical pickup device written in one of items 24 - 35, in which the second optical path difference providing structure is a NPS (Non-Periodic Phase Structure).

Item 42 is the optical pickup device written in one of items 24 - 41, satisfying, 380 nm < $\lambda1$ < 420 nm, 630 nm < $\lambda2$ < 680 nm, 760 nm < $\lambda3$ < 830 nm, 0.0875 mm $\leq$ t1 $\leq$ 0.1125 mm, 0.5 mm $\leq$ t2 $\leq$ 0.7 mm, and 1.1 mm $\leq$ t3 $\leq$ 1.3 mm.

Item 43 is the optical pickup device written in one of items 24 - 41, satisfying 380 nm < $\lambda1$ < 420 nm, 630 nm < $\lambda2$ < 680 nm, 760 nm < $\lambda3$ < 830 nm, 0.5 mm $\leq$ t1 $\leq$ 0.7 mm, 0.5 mm $\leq$ t2 $\leq$ 0.7 mm, and 1.1 mm $\leq$ t3 $\leq$ 1.3 mm.

Item 44 is the optical pickup device written in one of items 24 - 43, in which a material of the objective optical unit is glass.

Item 45 is the optical pickup device written in item 43, in the structure written in one of items 24 - 43, in which a material of the objective optical unit is plastic.

Item 46 is a designing method of an objective optical unit for used in an optical pickup device for making a converged light spot on an information recording surface of a first optical information recording medium having a protective layer with a thickens t1 using a first light flux with a wavelength $\lambda1$ emitted from a first light source, for making a converged light spot on an information recording surface of a second optical information recording medium having a protective layer with a thickens t2 (t1 $\leq$ t2) using a second light flux with a wavelength $\lambda2$ ($\lambda1 < \lambda2$) emitted from a second light source, and for making a converged light spot on an information recording surface of a third optical information recording medium having a protective layer with a thickens t3 (t2 < t3) using a third light flux with a wavelength $\lambda3$ (1.9 x $\lambda1 < \lambda3 < 2.1$ x $\lambda1$) emitted from a third light source. The designing method includes: a first step of designing a plurality of refractive optical surfaces of the objective optical unit, and a first optical path difference providing structure formed on one optical surface of the plurality of refractive optical surfaces, including a plurality of ring-shaped zones, and providing an optical path difference equivalent to odd times of the wavelength $\lambda1$ to the first light flux passing through adjoining ring-shaped zones. It is designed so that the objective optical unit corrects a spherical aberration of the objective optical unit when the first light flux enters into the objective optical unit whose magnification is to be M and a converged light spot is formed on the information recording surface of a first optical information recording medium. It is also designed so that the objective optical unit corrects a spherical aberration of the objective optical unit when the third light flux enters into the objective optical unit whose magnification is to be M and a converged light spot is formed on the information recording surface of a third optical information recording medium. The designing method further includes: a second step of designing a second optical path difference providing structure formed on one optical surface of the plurality of refractive optical surfaces, including a plurality of ring-shaped zones, and providing an optical path difference equivalent to odd times of the wavelength $\lambda1$ to the first light flux passing through adjoining ring-shaped zones. It is designed so that the objective optical unit corrects a spherical aberration of the objective optical unit when the second light flux enters into the objective optical unit designed by the first step whose magnification is to be M and a converged light spot is formed on the information recording surface of a second optical information recording medium.

In the present specification, the "objective optical unit" indicates an optical element which is arranged at a position facing the optical information recording medium in the optical pickup device, and which at least includes the light converging element having a light converging function converging each of light fluxes emitted by the light sources and having mutually different wavelengths onto a each corresponding information recording surface of an optical information recording media (it is also described as optical disks) whose recording density are mutually different.

Further, in the case where the objective optical unit is formed of the glass lens, when the glass material whose glass transition point Tg is 400 °C or less is used, it can be molded at the comparatively low temperature. It allows the life of the metallic die is extended. As such a glass material whose glass transition point Tg is low, for example, there are K-PG325 or K-PG375 (both are trade name) made by Sumita Optical Glass, Inc.

Hereupon, the glass lens generally has the larger specific gravity than the resin lens. So, when the objective optical unit is formed of glass lens, the weight is increased and a burden is loaded on the actuator which drives the objective optical system. Therefore, it is preferable that the glass material whose specific gravity is small, is used when the objective optical unit is formed of the glass lens. Specifically, the specific gravity is preferably 3.0 or less, and is more preferably 2.8 or less.

Further, when the objective optical unit is formed of a resin lens, the resin material is preferably belongs to cyclic olefin system. Among the cyclic olefin system, the resin material more preferably has a refractive index being within a range of 1.54 to 1.60 at temperature 25 °C for wavelength 405 nm, and has a change ratio dN/dT ($°C^{-1}$) of the refractive index is within the range of $-10 \times 10^{-5}$ to $-8 \times 10^{-5}$ for the wavelength 405 nm caused by the temperature change within the temperature range of -5 °C to 70 °C.

Alternatively, there is the "athermal resin" as the resin material appropriate for the objective optical unit according to the present invention other than the cyclic olefin system. "Athermal resin" is a resin material in which microparticles whose diameter is 30 nm or less and whose change ratio of the refractive index has a sign reverse to the change ratio of the refractive index caused by the temperature change of the resin of the base material, are dispersed. Generally, when microparticles are mixed in the transparent resin material, light is scattered and the transmission factor is lowered. So, it is difficult to use as the optical material. However, it becomes clear that the microparticles whose size is smaller than the wavelength of the transmitting light flux prevent the scattering effectively.

Hereupon, the refractive index of the resin material is lowered when the temperature rises, while the refractive index of the inorganic microparticles is increased when the temperature rises. Accordingly, it is also well known that combining these nature to affect to cancel out each other prevents the refractive index change. There is provided the objective optical unit having no temperature dependency of the refractive index, or very low temperature dependency when the material in which the inorganic particles whose size is 30 nanometer or less, preferably is 20 nanometer or less, more preferably 10 - 15 nanometer, are dispersed in the resin as base material is used as the material of the objective optical unit according to the present invention.

For example, acryl resin in which microparticles of niobium oxide ($Nb_2O_3$) are dispersed is provided. The volume ratio of the resin material that represents the basic material is about 80% and that of niobium oxide is about 20%, and these are mixed uniformly. Though microparticles have a problem that they tend to condense, the necessary state of dispersion can be kept by a technology to disperse particles by giving electric charges to the surface of each particle.

It is preferable that microparticles are mixed and dispersed into the resin as a base material in line in the case of injection molding of optical elements. In other words, it is preferable that an objective optical unit is neither cooled nor solidified until it is molded, after its materials are mixed and dispersed, because the mixture is molded into an objective optical unit.

Incidentally, for controlling a rate of change of the refractive index for temperature, a volume ratio of acrylic resins to niobium oxide in the aforementioned temperature-affected characteristics adjustable material can be raised or lowered properly, and it is also possible to blend and disperse plural types of inorganic particles in a nanometer size.

Though a volume ratio of acrylic resins to niobium oxide is made to be 80 : 20, namely to be 4 : 1, in the example stated above, it is possible to adjust properly within a range from 90 : 10 (9 : 1) to 60 : 40 (3 : 2). It is not preferable when an amount of niobium oxide is less to be out of 9 : 1, because an effect of restraining temperature-affected changes becomes small. While, it is not also preferable when an amount of niobium oxide is more to be out of 3 : 2, because moldability of resins becomes problematic.

It is preferable that the microparticles are inorganic substances, and more preferable that the microparticles are oxides. Further, it is preferable that the state of oxidation is saturated, and the oxides are not oxidized any more.

It is preferable that the microparticles are inorganic substances because reaction between the inorganic substances and resin as a base material representing high molecular organic compound is restrained to be low, and deterioration caused by actual use such as irradiation of laser beam can be prevented because the microparticles are oxides. In particular, under the severe conditions such as high temperature and irradiation of a laser beam, oxidation of resin tends to be accelerated. However, microparticles of this inorganic oxide can prevent deterioration caused by oxidation.

Further, it is naturally possible to add antioxidants in resin material to prevent oxidation of resin caused by other factors.

Materials described in JP-A 2004-144951, JP-A 2004-144953, JP-A 2004-144954 are suitable for a preferable material to be base material.

Inorganic microparticles to be dispersed in thermoplastic resin are not limited in particular, and suitable microparticles can be selected from inorganic microparticles which achieves one of objectives of the present invention that thermoplastic resin composition to be obtained has a small rate of refractive index change caused by temperature (hereinafter, |dn/dT|). To be concrete, oxide microparticles, metal salt microparticles and semiconductor microparticles are preferably used, and it is preferable to use by selecting properly those wherein absorption, light emission and fluorescence are not generated in the wavelength area used as an optical element, from the aforesaid microparticles.

The following metal oxide is used for oxide microparticles used in the structure according to the present invention: a metal oxide constructed by one or more kinds of metal selected by a group including Li, Na, Mg, Al, Si, K, Ca, Sc, Ti, V, Cr, Mn, Fe, Co, Ni, Cu, Zn, Rb, Sr, Y, Nb, Zr, Mo, Ag, Cd, In, Sn, Sb, Cs, Ba, La, Ta, Hf, W, Ir, Tl, Pb, Bi and rare earth metal. More specifically, for example, oxide such as silicon oxide, titanium oxide, zinc oxide, aluminum oxide, zirconium oxide, hafnium oxide, niobium oxide, tantalum oxide, magnesium oxide, calcium oxide, strontium oxide, barium oxide, indium oxide, tin oxide, lead oxide; complex oxide compounds these oxides such as lithium niobate, potassium niobate and lithium tantalate, the aluminum magnesium oxide ($MgAl_2O_4$) are cited. Furthermore, rare earth oxides are used for the oxide microparticles in the structure according to the present invention. More specifically, for example, scandium oxide, yttrium oxide, lanthanum trioxide, cerium oxide, praseodymium oxide, neodymium oxide, samarium oxide, europium oxide, gadolinium oxide, terbium oxide, dysprosium oxide, holmium oxide, erbium oxide, thulium oxide, ytterbium oxide, lutetium oxide are cited. As metal salt microparticles, the carbonate, phosphate, sulfate, etc. are cited. More specifically, for example, calcium carbonate, aluminum phosphate are cited.

Moreover, semiconductor microparticles in the structure according to the present invention mean the microparticles constructed by a semiconducting crystal. The semiconducting crystal composition examples include simple substances of the 14th group elements in the periodic table such as carbon, silica, germanium and tin; simple substances of the 15th group elements in the periodic table such as phosphor (black phosphor); simple substances of the 16th group elements in the periodic table such as selenium and tellurium; compounds comprising a plural number of the 14th group elements in the periodic table such as silicon carbide (SiC); compounds of an element of the 14th group in the periodic table and an element of the 16th group in the periodic table such as tin oxide (IV) ($SnO_2$), tin sulfide (II, IV) (Sn(II)Sn(IV) $S_3$), tin sulfide (IV) ($SnS_2$), tin sulfide (II) (SnS), tin selenide (II) (SnSe), tin telluride (II) (SnTe), lead sulfide (II) (PbS), lead selenide (II) (PbSe) and lead telluride (II) (PbTe); compounds of an element of the 13th group in the periodic table and an element of the 15th group in the periodic table (or III-V group compound semiconductors) such as boron nitride (BN), boron phosphide (BP), boron arsenide (BAs), aluminum nitride (AlN), aluminum phosphide (AlP), aluminum arsenide (AlAs), aluminu antimonide (AlSb), gallium nitride (GaN), gallium phosphide (GaP), gallium arsenide (GaAs), gallium antimonide (GaSb), indium nitride (InN), indium phophide (InP), indium arsenide (InAs) and indium antimonide (InSb); compounds of an element of the 13th group in the periodic table and an element of the 16th group in the periodic table such as aluminum sulfide ($Al_2S_3$), aluminum selenide ($Al_2Se_3$), gallium sulfide ($Ga_2S_3$), gallium selenide ($Ga_2Se_3$), gallium telluride ($Ga_2Te_3$), indium oxide ($In_2O_3$), indium sulfide ($In_2S_3$), indium selenide (InSe) and indium telluride ($In_2Te_3$); compounds of an element of the 13th group in the periodic table and an element ot the 16th group in the periodic table such as thallium chloride (I) (TlCl), thallium bromide (I) (TlBr), thallium iodide (I) (TlI); compounds of an element of the 12th group in the periodic table and an element of the 16th group in the periodic table (or II-VI group compound semiconductors) such as zinc oxide (ZnO), zinc sulfide (ZnS), zinc selenide (ZnSe), zinc telluride (ZnTe), cadmium oxide (CdO), cadmium sulfide (CdS), cadmium selenide (CdSe), cadmium telluride (CdTe), mercury sulfide (HgS), mercury selenide (HgSe) and mercury telluride (HgTe); compounds of an element of the 15th group in the periodic table and an element of the 16th group in the periodic table such as arsenic sulfide (III) ($As_2S_3$), arsenic selenide (III) ($As_2Se_3$), arsenic telluride (III) ($As_2Te_3$), antimony sulfide (III) ($Sb_2S_3$), antimony selenide (III) ($Sb_2Se_3$), antimony telluride (III) ($Sb_2Te_3$), bismuth sulfide (III) ($Bi_2S_3$), bismuth selenide (III) ($Bi_2Se_3$) and bismuth telluride (III) ($Bi_2Te_3$); compounds of an element of the 11th group in the periodic table and an element of the 16th group in the periodic table such as copper oxide (I) ($Cu_2O$) and copper selenide (I) ($Cu_2Se$); compounds of an element of the 11th group in the periodic table and an element of the 17th group in the periodic table such as copper chloride (I) (CuCl), copper bromide (I) (CuBr), copper iodide (I) (CuI), silver chloride (AgCl) and silver bromide (AgBr); compounds of an element of the 10th group in the periodic table and an element of the 16th group in the periodic table such as nickel oxide (II) (NiO); compounds of an element of the 9th group in the periodic table and an element of the 16th group in the periodic table such as cobalt oxide (II) (CoO) and cobalt sulfide (II) (CoS); compounds of an element of the 8th group in the periodic table and an element of the 16th group in the periodic table such as triiron tetraoxide ($Fe_3O_4$) and iron sulfide (II) (FeS); compounds of an element of the 7th group in the periodic table and an element of the 16th group in the periodic table such as manganese oxide (II) (MnO); compounds of an element of the 6th group in the periodic table and an element of the 16th group in the periodic table such as molybdenum sulfide (IV) ($MoS_2$) and tungsten oxide(IV) ($WO_2$); compounds of an element of the 5th group in the periodic table and an element of the 16th group in the periodic table such as vanadium oxide (II) (VO), vanadium oxide (IV) ($VO_2$) and tantalum oxide (V) ($Ta_2O_5$); compounds of an element of the 4th group in the periodic table and an element of the 16th group in the periodic table such as titanium oxide (such as $TiO_2$, $Ti_2O_5$, $Ti_2O_3$ and $Ti_5O_9$); compounds of an element of the 2th group in the periodic table and an element of the 16th group in the periodic table such as magnesium sulfide (MgS) and magnesium selenide (MgSe); chalcogen spinels such as cadmium oxide (II) chromium (III) ($CdCr_2O_4$), cadmium selenide (II) chromium (III) ($CdCr_2Se_4$), copper sulfide (II) chromium (III) ($CuCr_2S_4$) and mercury selenide (II) chromium (III) ($HgCr_2Se_4$); and barium titanate ($BaTiO_3$). Further, semiconductor clusters structures of which are established such as $BN_{75}(BF_2)_{15}F_{15}$, described in Adv. Mater., vol. 4, p.494 (1991) by G. Schmid, et al.; and $Cu_{146}Se_{73}(triethylphosphine)_{22}$ described in Angew. Chem. Int. Ed. Engl., vol. 29, p.1452 (1990) by D. Fenske are also listed as examples.

In general, dn/dT of thermoplastic resin has a negative value, namely, a refractive index becomes smaller as a temperature rises. Therefore, it is preferable to disperse microparticles having large dn/dT, for making |dn/dT| of thermoplastic resin composition to be small efficiently. It is preferable that the absolute value of dn/dT of particles is smaller than dn/dT of the thermoplastic resin used as a base material in case of using microparticles having dn/dT with same sign to the sign of dn/dT of the thermoplastic resin. Furthermore, microparticles having positive dn/dT, which is microparticles having different sign of dn/dT from dn/dT of the thermoplastic resin which is a base material, are preferably used. By dispersing these kinds of microparticles into the thermoplastic resin, |dn/dT| of thermoplastic resin composition can effectively become small with less amount of the microparticles. Though it is possible to select properly dn/dT of microparticles to be dispersed, by using a value of dn/dT of thermoplastic resin to become a base material, it is preferable that dn/dT of microparticles is greater than $-20 \times 10^{-6}$ and it is more preferable that dn/dT of microparticles is greater than $-10 \times 10^{-6}$. As microparticles having large dn/dT, gallium nitride, zinc sulfate, zinc oxide, lithium niobate and lithium tantalite, for example, are preferably used.

On the other hand, when dispersing microparticles in thermoplastic resin, it is preferable that a difference of refractive index between the thermoplastic resin to become a base material and the microparticles is small. As a result of the studies of the inventors, it was found out that scattering is hardly caused when light is transmitted, if a difference of refractive index between the thermoplastic resin and the microparticles to be dispersed is small. It was found out that when dispersing microparticles in the thermoplastic resin, if a particle is larger, scattering in the case of transmittance of light tends to be generated, but if a difference of refractive index between the thermoplastic resin and the microparticles to be dispersed is small, a rate of occurrence of scattering of light is low even when relatively large microparticles are used. A difference of refractive index between the thermoplastic resin and the microparticles to be dispersed is preferably within a range of 0 - 0.3, and a range of 0 - 0.15 is more preferable.

Refractive indexes of thermoplastic resins used preferably as optical materials are about 1.4 - 1.6 in many cases, and as materials to be dispersed in these thermoplastic resins, silica (silicon oxide), calcium carbonate, aluminum phosphate, aluminum oxide, magnesium oxide and aluminum · magnesium oxides, for example, are preferably used.

Further, studies made by the inventors have clarified that dn/dT of thermoplastic resin composition can be made small effectively, by dispersing microparticles whose refractive index is relatively low. As a reason why |dn/dT| of thermoplastic resin composition in which microparticles having low refractive index are dispersed becomes small, it is considered that temperature changes of the volume fraction of inorganic microparticles in the resin composition may work to make the |dn/dT| of the resin composition to become smaller when the refractive index of the microparticles is lower, although the details are not clarified. As microparticles having a relatively low refractive index, silica (silicon oxide), calcium carbonate and aluminum phosphate, for example, are preferably used.

It is difficult to improve simultaneously all of an effect of lowering dn/dT of the thermoplastic resin composition, light permeability and of a desired refractive index, and microparticles to be dispersed in the thermoplastic resin can be selected properly by considering a size of dn/dT of a microparticle itself, a difference of dn/dT between microparticles and the thermoplastic resin to become a base material, and the refractive index of the microparticles, depending on the characteristics which are required for the thermoplastic resin composition. Further, it is preferable, for maintaining light permeability, to use microparticles by selecting properly the affinity with the thermoplastic resin to become a base material, namely, dispersibility for the thermoplastic resin and microparticles which hardly cause light scattering.

For example, when using cyclic olefin polymer used for an optical element preferably as a base material, silica is preferably used as microparticles which make |dn/dT| small while keeping light permeability.

For the microparticles mentioned above, it is possible to use either one type of inorganic microparticles or plural types of inorganic microparticles in combination. By using plural types of microparticles each having a different characteristic, the required characteristics can further be improved efficiently.

Inorganic microparticles relating to the present invention preferably has an average particle size being 1 nm or larger and being 30 nm or smaller and more preferably has an average particle size being 1 nm or more and being 10 nm or less. When the average particle size is less than 1 nm, dispersion of the inorganic microparticles is difficult, resulting in a fear that the required efficiency may not be obtained, therefore, it is preferable that the average particle size is 1 nm or more. When the average particle size exceeds 30 nm, thermoplastic material composition obtained becomes muddy and transparency is lowered, resulting in a fear that the light transmittance may become less than 70%, therefore, it is preferable that the average particle size is 30 nm or less. The average particle size mentioned here means volume average value of a diameter (particle size in conversion to sphere) in conversion from each particle into a sphere having the same volume as that of the particle.

Further, a form of an inorganic microparticle is not limited in particular, but a spherical microparticle is used preferably. To be concrete, a range of 0.5 - 1.0 for the ratio of the minimum size of the particle (minimum value of the distance between opposing two tangents each touching the outer circumference of the microparticle) / the maximum size (maximum value of the distance between opposing two tangents each touching the outer circumference of the microparticle) is preferable, and a range of 0.7 - 1.0 is more preferable.

A distribution of particle sizes is not limited in particular, but a relatively narrow distribution is used suitably, rather than a broad distribution, for making the invention to exhibit its effect efficiently.

According to the present invention, the optical pickup device in which although it is compact, the recording and/or reproducing of the information can be adequately conducted on different kinds of the high density optical disks, can be provided.

Referring to the drawings, the embodiment of the present invention will be described below. Fig. 1 is a view schematically showing the structure of an optical pickup device PU1 of the present embodiment by which the recording and/or reproducing of the information can be adequately conducted on BD (or HD DVD), DVD and CD which are different optical information recording media (called also optical disk). Such an optical pickup device PU1 can be mounted in the optical information recording and/or reproducing apparatus. Herein, the first optical information recording medium is BD, the second optical information recording medium is DVD, and the third optical information recording medium is CD. Hereupon, it has a laser module LM provided with the second semiconductor laser EP1 (the second light source) which projects the laser light flux of 680 nm (second light flux) light-emitted when the recording and/or reproducing of the information is conducted on DVD, the third semiconductor laser EP2 (the third light source) which projects the laser light flux of 750 nm (the third light flux) light-emitted when the recording and/or reproducing of the information is conducted on CD, the first light receiving section DS1 which light receives the reflection light flux from the information recording surface RL2 of DVD, and the second light receiving section DS2 which light receives the reflection light flux from the information recording surface RL3 of CD, and a prism PS.

In the objective optical unit OBJ of the present embodiment, a central region including the optical axis on the aspheric surface optical surface on the light source side, a peripheral region arranged on its periphery, and an outer peripheral region arranged on further its periphery. In the central region, the first optical path difference providing structure and the second optical path difference providing structure are formed being superimposed. The first optical path difference providing structure includes ring-shaped zone like structure including a plurality of ring-shaped zones, and provides the light path difference equivalent to the odd times of wavelength $\lambda 1$ to the first light flux passing through the adjoining ring-shaped zones, and changes the spherical aberration to under-correction for all of the first light flux for BD, the second light flux for DVD, and the third light flux for CD. Further, the second optical path difference providing structure includes the ring-shaped like structure including a plurality of ring-shaped zones, and provides the light path difference equivalent to the even times of wavelength $\lambda 1$ to the first light flux passing through the adjoining ring-shaped zones, and changes the spherical aberration to over-correction only for the second light flux for DVD.

The above objective optical system is designed as follows.

First, as the first step, a plurality of refractive optical surfaces (aspheric optical surfaces) of the objective optical system and the first optical path difference providing structure formed on the refractive optical surface is designed such that when the first light flux, the second light flux and the third light flux enters into the objective optical system to have same magnifications for BD, DVD and CD on using, good converged light spots are formed on the information recording surfaces of BD and CD, respectively.

Concretely, the first optical path difference providing structure including a plurality of ring-shaped zones is formed on one of the plurality of refractive surfaces of the objective optical system, and the first optical path difference providing structure is designed so as to provide a optical path difference which is equivalent to odd times of the wavelength $\lambda 1$ to the first light flux passing through the adjacent ring-shaped zones. Additionally, it is preferable that the first optical path difference providing structure is designed so as to change spherical aberration for each of the first light flux, the second light flux and the third light flux to one of under-correction and over-correction.

Next, as the second step, the second optical path difference providing structure is designed so as to correct the spherical aberration generated by action of the refractive optical surface and the first optical path difference providing structure designed by the first step when the second light flux enters into the objective optical system designed by the first step whose magnification becomes same to magnifications in the first step, and when a converged light spot is formed on the information recording surface of DVD.

Concretely, the second optical path difference providing structure including a plurality of ring-shaped zones is formed and the second optical path difference providing structure is designed so as to provide a optical path difference which is equivalent to even times of the wavelength $\lambda 1$ to the first light flux passing through the adjacent ring-shaped zones. Additionally, it is preferable that the second optical path difference providing structure is designed so as to change spherical aberration only for the second light flux to the other of under-correction and over-correction.

By repeating the first step and the second step as required, suitable the refractive optical surfaces, the first optical path difference providing structure and the second optical path difference providing structure are designed.

When the light flux of wavelength $\lambda 1$ emitted from the blue violet semiconductor laser LD1 enters into the objective optical unit OBJ as a parallel light, the aspheric surface itself corrects the spherical aberration to under-correction. However, when it passes the first optical path difference providing structure, the spherical aberration is adequately corrected and the second optical path difference providing structure does not influence on it. It allows adequately recording and/or reproducing information on BD whose protective layer thickness is t1. Further, when the light flux of wavelength $\lambda 2$ emitted from the red semiconductor laser EP1 enters into the objective optical unit OBJ as the parallel light, the aspheric surface itself corrects the spherical aberration to more under-correction. So, when it passes the first optical path difference providing structure, the spherical aberration is corrected to under-correction. By correcting it to over-correcting by the second optical path difference providing structure, information is adequately recorded and/or reproduced on DVD whose protective layer thickness is t2. Further, when the light flux of wavelength λ3 emitted from the infrared semiconductor laser EP2 enters into the objective optical unit OBJ as the parallel light, the aspheric surface itself corrects the spherical aberration to under-correction. However, when it passes the first optical path difference providing structure, the spherical aberration is adequately corrected and the second optical path difference providing structure does not influence on it. It allows adequately recording and/or reproducing information on CD whose protective layer thickness is t3.

The divergent light flux of the first wavelength 408 nm emitted from the blue violet semiconductor laser LD1 transmits the polarized dichroic prism PPS and it is made into the parallel light flux by the collimator lens CL. It is converted into the circularly polarized light from the linear polarized light by 1/4 wavelength plate, not shown, and its light flux diameter is restricted by a stop ST, and becomes a spot formed on the information recording surface RL1 of BD through the protective layer PL1 whose thickness is 0.0785 mm by the objective optical unit OBJ.

The reflected light flux modulated by the information pit on the information recording surface RL1 passes again the objective optical unit OBJ and the stop ST. After that, it is converted into the linear polarized light from the circularly polarized light by 1/4 wavelength plate, not shown, and made into the converging light flux by the collimator lens CL. It passes through the polarizing dichroic prism PPS, and is converged on the light receiving surface of the first light detector PD1. Then, the 2-axis actuator AC actuates the objective optical unit OBJ for focusing or tracking by using the output signal of the first light detector PD1 to read information recorded in BD.

After the divergent light flux of 680 nm emitted from the red semiconductor laser EP is reflected by the prism PS, it is also reflected by the polarized dichroic prism PPS and is made into the parallel light flux by the collimator lens CL. It is converted into the circularly polarized light from the linear polarized light by 1/4 wavelength plate, not shown, and enters into the objective optical unit OBJ. Herein, the light flux converged by the central region and the peripheral region becomes a spot formed on the information recording surface RL2 of DVD through the protective layer PL2 whose thickness is 0.6 mm. Herein, the light flux passed the other regions is made into a flare light.

The reflection light flux modulated by the information pit on the information recording surface RL2 passes again the objective optical unit OBJ and the stop ST. It is converted into the linear polarized light from the circularly polarized light by 1/4 wavelength plate, not shown, and is made into the converging light flux by the collimator lens CL. After that, it is reflected by the polarizing dichroic prism PPS. After it is reflected two times in the prism, it is converged on the first light receiving part DS1. Then, by using the output signal of the first light receiving part DS1, the information recorded in DVD can be read.

The divergent light flux of 750 nm emitted from the infrared semiconductor laser EP2 is reflected by the prism PS, and is reflected by the polarized dichroic prism PPS and after that, it is made into the parallel light flux by the collimator lens CL. It is converted into the circularly polarized light from the linear polarized light by 1/4 wavelength plate, not shown, and enters into the objective optical unit OBJ. The light flux converged only by the central region becomes a spot formed on the information recording surface RL3 of CD through the protective layer PL3 whose thickness is 1.2 mm. Herein, the light flux passed the other region is made into a flare light flux.

The reflection light flux modulated by the information pit on the information recording surface RL3 passes again the objective optical unit OBJ and the stop ST, and it is converted into the linear polarized light from the circularly polarized light by 1/4 wavelength plate, not shown, and is made into the converging light flux by the collimator lens CL. After that, it is reflected by the polarizing dichroic prism PPS. After it is reflected two times in the prism, it is converged on the second light receiving part DS2. Then, by using the output signal of the second light receiving part DS2, the information recorded in CD can be read.

(Example 1)

Next, the example which can be used for the above-described embodiments will be described. In Example 1, the first optical path difference providing structure and the second optical path difference providing structure are formed in the central region of the optical surface of the objective optical unit being single lens. Lens data is shown in Tables 1 to 3. The sign ri in Table 1 expresses the radius of curvature, di expresses the position in the optical axis direction from the i-th surface to the (i + 1)th surface, and ni expresses the refractive index of each surface. Hereupon, it is defined that the exponential of 10 (for example, $2.5 \times 10^3$) is expressed by using E (for example, 2.5 x E -3) hereinafter (including the lens data in Table).

[Table 1]

Example 1

```
                    HD DVD        DVD              CD
        Focal length of the objective lens
                f₁ = 2.27 mm,  f₂ = 2.34 mm,  f₃ = 2.33 mm
        Numerical aperture on image surface side
                NA1: 0.65       NA2: 0.65       NA3: 0.51
        Optical system magnification of the objective lens
                m1: 0           m2: 0           m3: 0
```

| i-th surface | ri | di (408nm) | ni (408nm) | di (660nm) | ni (660nm) | di (784.8nm) | ni (784.8nm) |
|---|---|---|---|---|---|---|---|
| 0 | | ∞ | | ∞ | | ∞ | |
| 1 (stop diameter) | ∞ | 0.0 (φ3.04mm) | | 0.0 (φ3.04mm) | | 0.0 (φ3.04mm) | |
| 2‴ | 1.4814 | -0.015233 | 1.5587 | -0.015233 | 1.5397 | -0.015233 | 1.5363 |
| 2″ | 1.4775 | -0.000793 | 1.5587 | -0.00793 | 1.5397 | -0.000793 | 1.5363 |
| 2′ | 1.4848 | 0.001696 | 1.5587 | 0.001696 | 1.5397 | 0.001696 | 1.5363 |
| 2 | 1.4833 | 1.5 | 1.5587 | 1.5 | 1.5397 | 1.5 | 1.5363 |
| 3′ | -8.7234 | 0.000000 | 1.0 | 0.000000 | 1.0 | 0.000000 | 1.0 |
| 3 | -8.8491 | 1.194 | 1.0 | 1.237 | 1.0 | 0.848 | 1.0 |
| 4 | ∞ | 0.6 | 1.6183 | 0.6 | 1.5772 | 1.2 | 1.5706 |
| 5 | ∞ | 0.000000 | 1.0 | 0.000000 | 1.0 | 0.000000 | 1.0 |

*di expresses the dislocation from the i-th surface to the (i + 1)th surface.

*each of di′ to di‴ expresses the dislocation from each of the i′ to i‴-th surfaces to the i-th surface respectively.

[Table 2]

The 2‴-nd surface (1.476 mm ≤ h) Aspheric surface coefficient

| | |
|---|---|
| κ | -6.3364E-01 |
| A4 | -4.2311E-03 |
| A6 | 5.0436E-03 |
| A8 | 4.1084E-03 |
| A10 | -5.3622E-03 |
| A12 | 2.1138E-03 |
| A14 | -3.1786E-04 |

The 2″-nd surface (1.19455 mm ≤ h < 1.476 mm) Aspheric surface coefficient

| | |
|---|---|
| κ | -6.4519E-01 |
| A4 | -4.8752E-03 |
| A6 | 4.6494E-03 |
| A8 | 4.0919E-03 |
| A10 | -5.2266E-03 |
| A12 | 2.1777E-03 |
| A14 | -3.7013E-04 |

The 2′-nd surface (0.557927 mm ≤ h < 1.19455 mm) Aspheric surface coefficient

| | |
|---|---|
| κ | -6.3303E-01 |

(continued)

| The 2'-nd surface (0.557927 mm ≤ h < 1.19455 mm) Aspheric surface coefficient | |
|---|---|
| A4 | -1.8840E-03 |
| A6 | 6.2288E-03 |
| A8 | -3.0119E-03 |
| A10 | -1.9076E-03 |
| A12 | 2.2446E-03 |
| A14 | -5.7694E-04 |

| The 2nd surface (0 mm ≤ h <0.557927 mm) Aspheric surface coefficient | |
|---|---|
| κ | -5.5555E-01 |
| A4 | -8.2359E-03 |
| A6 | 6.8885E-03 |
| A8 | -2.0036E-03 |
| A10 | -2.2154E-03 |
| A12 | 1.6340E-03 |
| A14 | -3.3402E-04 |

| The 3'-rd surface (0.967 mm ≤ h) Aspheric surface coefficient | |
|---|---|
| κ | 1.1882E-02 |
| A4 | 2.8622E-02 |
| A6 | -3.8760E-02 |
| A8 | 2.1958E-02 |
| A10 | -6.3081E-03 |
| A12 | 7.2874E-04 |
| A14 | 0.0000E+00 |

| The 3rd surface (0 mm ≤ h < 0.967 mm) Aspheric surface coefficient | |
|---|---|
| κ | 2.0065E-02 |
| A4 | -2.7360E-02 |
| A6 | 1.7561E-02 |
| A8 | -5.7857E-03 |
| A10 | 8.1371E-04 |
| A12 | 0.0000E+00 |
| A14 | 0.0000E+00 |

[Table 3]

| The 2'''-nd surface (1.476 mm ≤ h) Optical path difference function (diffraction-order DVD: 3rd-order) | |
|---|---|
| λB | 660 nm |
| C2 | -4.8087E-03 |
| C4 | -2.2941E-03 |
| C6 | 1.0177E-03 |
| C8 | -4.5620E-04 |
| C10 | 8.9625E-05 |

| The 2"-nd surface (1.19455 mm ≤ h < 1.476 mm) Optical path difference function (diffraction-order HD DVD: 3rd-order, DVD: 2nd-order) | |
|---|---|
| λB | 422 nm |
| C2 | -3.6562E-03 |
| C4 | -2.0383E-03 |
| C6 | 9.7975E-04 |

(continued)

The 2"-nd surface (1.19455 mm $\leq$ h < 1.476 mm) Optical path difference function (diffraction-order HD DVD: 3rd-order, DVD: 2nd-order)

| | |
|---|---|
| C8 | -4.6808E-04 |
| C10 | 6.2043E-05 |

The 2'-nd surface (0.557927 mm $\leq$ h < 1.19455 mm) Optical path difference function (diffraction-order HD DVD: 3rd-order, DVD: 2nd-order, CD: 2nd-order)

| | |
|---|---|
| $\lambda$B | 430 nm |
| C2 | -3.4332E-03 |
| C4 | -2.0583E-03 |
| C6 | 1.0106E-03 |
| C8 | -9.5866E-04 |
| C10 | 2.3654E-04 |

The 2nd surface (0 mm $\leq$ h <0.557927 mm) Optical path difference function (diffraction-order HD DVD: 3rd-order, DVD: 2nd-order, CD: 2nd-order)

| | |
|---|---|
| $\lambda$B | 430 nm |
| C2 | -3.5696E-03 |
| C4 | -2.3823E-03 |
| C6 | -4.6479E-04 |
| C8 | 1.1071E-02 |
| C10 | -2.1534E-02 |

Hereupon, the optical surface of the objective optical unit is formed into an aspheric surface symmetric around the optical axis which is prescribed by an equation into which coefficients shown in Table 1 are substituted respectively (same as in Examples 2 and 3).

[Math-1]

$$Z = (h^2/\gamma)/[1+\sqrt{\{1-(K+1)(h/\gamma)^2\}}] + A_4h^4 + A_6h^6 + A_8h^8 + A_{10}h^{10} + A_{12}h^{12} + A_{14}h^{14} + A_{16}h^{16} + A_{18}h^{18} + A_{20}h^{20}$$

Where, Z is an aspheric surface shape (the distance in the direction along the optical axis from the plane tangent to the top of surface),
h is a distance from the optical axis,
$\gamma$ is a radius of curvature,
K is a conic coefficient, and
each of $A_4$, $A_6$, $A_8$, $A_{10}$, $A_{12}$, $A_{19}$, $A_{16}$, $A_{18}$, $A_{20}$ is aspheric surface coefficient.
Further, the optical path length given to the light flux of each wavelength by the first optical path difference providing structure and the second optical path difference providing structure is prescribed by the equation in which coefficients shown in Table 1 are substituted into the optical path difference function of Math-2, (the same as in Examples 2 and 3).

[Math-2]

$$\phi = dor \times \lambda/\lambda_B \times (C_2h^2 + C_4h^4 + C_6h^6 + C_8h^8 + C_{10}h^{10})$$

Where, $\phi$: optical path difference function,
$\lambda$ is the wavelength of the light flux incident on the diffractive structure,
$\lambda_B$ is a blaze wavelength,
dor is the diffraction order of the diffracted light flux used for the recording and/or reproducing on optical disk
h: the distance from the optical axis, and
each of $C_2$, $C_4$, $C_6$, $C_8$, $C_{10}$ is optical path difference function coefficient.

Fig. 4(a) is a view showing the relationship between the height from the optical axis and the defocus amount at the time of use of HD DVD in Example 1, Fig. 4(b) is a view showing the relationship between the height from the optical axis and the defocus amount at the time of use of DVD in Example 1, and Fig. 4(c) is a view showing the relationship between the height from the optical axis and the defocus amount at the time of use of CD in Example 1.

(Example 2)

In Example 2, the first optical path difference providing structure and the second optical path difference providing structure are formed in the central region of the optical surface of the objective optical unit of single lens. Lens data is shown in Tables 4 to 6. Fig. 5(a) is a view showing the relationship between the height from the optical axis and the defocus amount at the time of use of HD DVD in Example 2, Fig. 5(b) is a view showing the relationship between the height from the optical axis and the defocus amount at the time of use of DVD in Example 2, and Fig. 5(c) is a view showing the relationship between the height from the optical axis and the defocus amount at the time of use of CD in Example 2.

[Table 4]

Example 2

                       HD DVD          DVD            CD
        Focal length of the objective lens
            $f_1$ = 3.1 mm, $f_2$ = 3.19 mm, $f_3$ = 3.17 mm
        Numerical aperture on image surface side
            NA1: 0.65       NA2: 0.65      NA3: 0.51
        Optical system magnification of the objective lens
            m1: 0          m2: 0          m3: 0

| i-th surface | ri | di (407.9nm) | ni (407.9nm) | di (661nm) | ni (661nm) | di (785nm) | ni (785nm) |
|---|---|---|---|---|---|---|---|
| 0 | | ∞ | | ∞ | | ∞ | |
| 1 (stop diameter) | ∞ | 0.0 (φ4.15mm) | | 0.0 (φ4.15mm) | | 0.0 (φ4.15mm) | |
| 2‴ | 2.0673 | -0.003630 | 1.5583 | -0.003630 | 1.5392 | -0.003630 | 1.5372 |
| 2″ | 1.9712 | -0.008050 | 1.5583 | -0.008050 | 1.5392 | -0.008050 | 1.5372 |
| 2′ | 2.0309 | 0.002818 | 1.5583 | 0.002818 | 1.5392 | 0.002818 | 1.5372 |
| 2 | 1.9977 | 1.76 | 1.5583 | 1.76 | 1.5392 | 1.76 | 1.5372 |
| 3′ | -14.8446 | 0.000000 | 1.0 | 0.000000 | 1.0 | 0.000000 | 1.0 |
| 3 | -12.9585 | 1.698 | 1.0 | 1.762 | 1.0 | 1.363 | 1.0 |
| 4 | ∞ | 0.6 | 1.6183 | 0.6 | 1.5771 | 1.2 | 1.5706 |
| 5 | ∞ | 0.000000 | 1.0 | 0.000000 | 1.0 | 0.000000 | 1.0 |

*di expresses the dislocation from the i-th surface to the (i + 1)th surface.
*each of di′ to di‴ expresses the dislocation from each of the i′ to i‴-th surface to the i-th surface respectively.

[Table 5]
The 2‴-nd surface (2.015 mm ≤ h) Aspheric surface coefficient

| | |
|---|---|
| κ | -5.1330E-01 |
| A4 | 4.7453E-04 |
| A6 | 1.1957E-03 |
| A8 | -3.2188E-04 |
| A10 | 6.7242E-05 |
| A12 | -1.9247E-05 |
| A14 | 1.3046E-06 |

(continued)

The 2"-nd surface (1.627 mm ≤ h <2.015 mm) Aspheric surface coefficient

| | |
|---|---|
| κ | -5.0416E-01 |
| A4 | -2.0181E-03 |
| A6 | 4.0125E-04 |
| A8 | -4.4218E-04 |
| A10 | 8.8719E-05 |
| A12 | -2.8183E-06 |
| A14 | -1.1363E-06 |

The 2'-nd surface (0.781 mm ≤ h <1.627 mm) Aspheric surface coefficient

| | |
|---|---|
| κ | -3.3204E-01 |
| A4 | 9.8418E-04 |
| A6 | -2.8508E-03 |
| A8 | -1.7183E-04 |
| A10 | 6.0934E-04 |
| A12 | -2.4368E-04 |
| A14 | 3.1371E-05 |

The 2nd surface (0 mm ≤ h <0.781 mm) Aspheric surface coefficient

| | |
|---|---|
| κ | -6.2999E-01 |
| A4 | -9.1919E-04 |
| A6 | 8.2567E-04 |
| A8 | -3.1894E-04 |
| A10 | 6.8151E-05 |
| A12 | -1.5655E-05 |
| A14 | 1.8317E-06 |

The 3'-rd surface (1.281 mm ≤ h) Aspheric surface coefficient

| | |
|---|---|
| κ | 1.4091E-03 |
| A4 | 6.8673E-03 |
| A6 | -4.3371E-03 |
| A8 | 1.3239E-03 |
| A10 | -2.1645E-04 |
| A12 | 1.4592E-05 |
| A14 | 0.0000E+00 |

The 3rd surface (0 mm ≤ h < 1.281 mm) Aspheric surface coefficient

| | |
|---|---|
| κ | 6.5665E-03 |
| A4 | -4.5413E-03 |
| A6 | 1.4141E-03 |
| A8 | -1.9214E-04 |
| A10 | 1.1604E-05 |
| A12 | 0.0000E+00 |
| A14 | 0.0000E+00 |

[Table 6]

The 2'"-nd surface (2.015 mm ≤ h) Optical path difference function (diffraction-order DVD: 3rd-order)

| | |
|---|---|
| λB | 661 nm |
| C2 | -8.5317E-03 |
| C4 | -2.1148E-03 |
| C6 | 4.6703E-04 |
| C8 | -1.3964E-04 |
| C10 | 1.2506E-05 |

(continued)

The 2"-nd surface (1.627 mm ≤ h <2.015 mm) Optical path difference function (diffraction-order HD DVD: 3rd-order, DVD: 2nd-order)

| | |
|---|---|
| λB | 422 nm |
| C2 | -2.7534E-03 |
| C4 | -9.8952E-04 |
| C6 | 5.0089E-04 |
| C8 | -1.5993E-04 |
| C10 | 1.6387E-05 |

The 2'-nd surface (0.781 mm ≤ h <1.627 mm) Optical path difference function (diffraction-order HD DVD: 3rd-order, DVD: 2nd-order, CD: 2nd-order)

| | |
|---|---|
| λB | 430 nm |
| C2 | -2.5159E-03 |
| C4 | -5.0889E-04 |
| C6 | 6.0415E-05 |
| C8 | -6.3277E-05 |
| C10 | 1.1297E-05 |

The 2nd surface (0 mm ≤ h <0.781 mm) Optical path difference function (diffraction-order HD DVD: 3rd-order, DVD: 2nd-order, CD: 2nd-order)

| | |
|---|---|
| λB | 430 nm |
| C2 | -2.5159E-03 |
| C4 | -9.3222E-04 |
| C6 | 9.5516E-04 |
| C8 | -7.1157E-04 |
| C10 | -9.5280E-05 |

(Example 3)

In Example 3, the first optical path difference providing structure and the second optical path difference providing structure are formed in the central region of the optical surface of the objective optical unit of single lens. Lens data is shown in Tables 7 to 9. Fig. 6(a) is a view showing the relationship between the height from the optical axis and the defocus amount at the time of use of HD DVD in Example 3, Fig. 6(b) is a view showing the relationship between the height from the optical axis and the defocus amount at the time of use of DVD in Example 3, and Fig. 6(c) is a view showing the relationship between the height from the optical axis and the defocus amount at the time of use of CD in Example 3.

[Table 7]

Example 3

HD DVD        DVD        CD

Focal length of the objective lens

$f_1$ = 3.1 mm, $f_2$ = 3.04 mm, $f_3$ = 2.98 mm

Numerical aperture on image surface side

NA1: 0.65      NA2: 0.662     NA3: 0.51

Optical system magnification of the objective lens

m1: 0      m2: 0      m3: 0

| i-th surface | Ri | di (407.9nm) | ni (407.9nm) | di (661nm) | ni (661nm) | di (785nm) | ni (785nm) |
|---|---|---|---|---|---|---|---|
| 0 | | ∞ | | ∞ | | ∞ | |
| 1(stop diameter) | ∞ | 0.0 (φ4.03mm) | | 0.0 (φ4.03mm) | | 0.0 (φ4.03mm) | |
| 2″ | 2.0217 | -0.001398 | 1.5583 | -0.001398 | 1.5392 | -0.001398 | 1.5372 |
| 2′ | 2.0170 | 0.002895 | 1.5583 | 0.002895 | 1.5392 | 0.002895 | 1.5372 |
| 2 | 2.0552 | 1.76 | 1.5583 | 1.76 | 1.5392 | 1.76 | 1.5372 |
| 3′ | -15.5382 | -0.0000038 | 1.0 | -0.0000038 | 1.0 | -0.0000038 | 1.0 |
| 3 | -15.3281 | 1.580 | 1.0 | 1.507 | 1.0 | 1.078 | 1.0 |
| 4 | ∞ | 0.6 | 1.6183 | 0.6 | 1.5771 | 1.2 | 1.5706 |
| 5 | ∞ | 0.000000 | 1.0 | 0.000000 | 1.0 | 0.000000 | 1.0 |

*di expresses the dislocation from the i-th surface to the (i + 1)th surface.

*each of di′ to di‴ expresses the dislocation from each of the i′ to i‴-th surface to the i-th surface respectively.

[Table 8]

The 2″-nd surface (1.536 mm ≤ h) Aspheric surface coefficient

| | |
|---|---|
| κ | -5.5021E-01 |
| A4 | -1.1531E-03 |
| A6 | 4.9495E-04 |
| A8 | -5.2887E-05 |
| A10 | 6.8790E-05 |
| A12 | -2.6130E-05 |
| A14 | 3.2493E-06 |

The 2'-nd surface (0.640 mm ≤ h < 1.536 mm) Aspheric surface coefficient

| | |
|---|---|
| κ | -6.2013E-01 |
| A4 | -2.2198E-03 |
| A6 | 1.5082E-04 |
| A8 | 4.1083E-04 |
| A10 | -8.3965E-05 |
| A12 | 2.4172E-04 |
| A14 | -6.1521E-05 |

(continued)

The 2nd surface (0 mm ≤ h < 0.640 mm) Aspheric surface coefficient

| | |
|---|---|
| κ | 1.2591E-01 |
| A4 | 9.7688E-03 |
| A6 | -3.0895E-02 |
| A8 | -4.6806E-05 |
| A10 | 6.0096E-05 |
| A12 | -2.7514E-05 |
| A14 | 3.6602E-06 |

The 3'-rd surface (1.155 mm ≤ h) Aspheric surface coefficient

| | |
|---|---|
| κ | 1.1692E-04 |
| A4 | 6.9208E-03 |
| A6 | -4.4641E-03 |
| A8 | 1.4470E-03 |
| A10 | -2.3774E-04 |
| A12 | 1.5996E-05 |
| A14 | 0.0000E+00 |

The 3rd surface (0 mm ≤ h < 1.155 mm) Aspheric surface coefficient

| | |
|---|---|
| κ | -1.3020E-02 |
| A4 | 2.2377E-02 |
| A6 | -6.6028E-03 |
| A8 | -2.0257E-04 |
| A10 | 1.2107E-05 |
| A12 | 0.0000E+00 |
| A14 | 0.0000E+00 |

[Table 9]

The 2"-nd surface (1.536 mm ≤ h) Optical path difference function (diffraction-order HD DVD: 1st-order, DVD: 1st-order, CD: 1st-order)

| | |
|---|---|
| λB | 480 nm |
| C2 | -0.014252299 |
| C4 | -0.001011949 |
| C6 | 0.000157457 |
| C8 | -3.23764E-05 |
| C10 | 1.14618E-06 |

The 2'-nd surface (0.640 mm ≤ h < 1.536 mm) Optical path difference function (diffraction-order HD DVD: 1st-order, DVD: 1st-order, CD: 1st-order)

| | |
|---|---|
| λB | 500 nm |
| C2 | -0.013633739 |
| C4 | -0.002797045 |
| C6 | 0.001319988 |
| C8 | -0.000320049 |
| C10 | 1.37424E-05 |

The 2nd surface (0 mm ≤ h < 0.640 mm) Optical path difference function (diffraction-order HD DVD: 1st-order, DVD: 1st-order, CD: 1st-order)

| | |
|---|---|
| λB | 500 nm |
| C2 | -0.016407031 |
| C4 | 0.010142585 |

(continued)

The 2nd surface (0 mm ≤ h < 0.640 mm) Optical path difference function (diffraction-order HD DVD: 1st-order, DVD: 1st-order, CD: 1st-order)

| | |
|---|---|
| C6 | -0.006418784 |
| C8 | -0.041683736 |
| C10 | 0.049734984 |

In Table 10, for each Example, the chromatic aberration per kind of the optical disk, the optical path difference providing amount given by the optical path difference providing structure, and the diffraction efficiency per kind of the optical disk are shown.

[Table 10]

| Chromatic aberration [$\mu$m/nm] | | | |
|---|---|---|---|
| | HD DVD | DVD | CD |
| Example 1 | 0.03 | -0.21 | -0.20 |
| Example 2 | 0.08 | -0.27 | -0.25 |
| Example 3 | 0.03 | -0.46 | -0.47 |

The first optical path difference providing structure and the second optical path difference providing structure

| | | name of technology | region | Optical path difference Providing amount [$\lambda$] | | |
|---|---|---|---|---|---|---|
| | | | | HD DVD | DVD | CD |
| Example 1 | A | Serrated diffractive structure | C | 3 | 2 | 2 |
| | B | NPS | D | 2 | 1 | 1 |
| Example 2 | A | Serrated diffractive structure | C | 3 | 2 | 2 |
| | B | NPS | D | 2 | 1 | 1 |
| Example 3 | A | Serrated diffractive structure | C | 1 | 1 | 1 |
| | B | NPS | D | 2 | 1 | 1 |
| * A: the first optical path difference providing structure<br>* B: the second optical path difference providing structure<br>* C: a plurality of ring-shaped zones in the s2 surface, s2' surface<br>* D: Each surface of the s2 surface, s2' surface is the ring-shaped zone | | | | | | |

Diffraction efficiency

| | Common region surface | HD DVD | DVD | CD |
|---|---|---|---|---|
| Example 1 | S2 surface, S2' surface | 0.895 | 0.968 | 0.553 |
| Example 2 | S2 surface, S2' surface | 0.897 | 0.965 | 0.557 |
| Example 3 | S2 surface, S2' surface | 0.880 | 0.756 | 0.569 |

**Claims**

1. An optical pickup device comprising:

a first light source for emitting a first light flux with a wavelength $\lambda 1$ for making a converged light spot on an information recording surface of a first optical information recording medium having a protective layer with a thickens t1;

a second light source for emitting a second light flux with a wavelength λ2 (λ1 < λ2) for making a converged light spot on an information recording surface of a second optical information recording medium having a protective layer with a thickens t2 (t1 ≤ t2);

a third light source for emitting a third light flux with a wavelength λ3 (1.9 x λ1 < λ3 < 2.1 x λ1) for making a converged light spot on an information recording surface of a third optical information recording medium having a protective layer with a thickens t3 (t2 < t3); and

an objective optical unit having

a first optical path difference providing structure formed by ring-shaped zones and

a second optical path difference providing structure formed by ring-shaped zones,

wherein when m1, m2 and m3 are magnifications of the objective optical unit when the first light flux, the second light flux, and the third light flux entering into the objective optical unit respectively, m1, m2 and m3 have an almost same value,

the first optical path difference providing structure provides an optical path difference equivalent to odd times of the wavelength λ1 to the first light flux passing through adjoining ring-shaped zones, and changes a spherical aberration to be one of under-correction and over-correction for all of the first light flux, the second light flux, and the third light flux, and

the second optical path difference providing structure provides an optical path difference equivalent to even times of the wavelength λ1 to the first light flux passing through adjoining ring-shaped zones, and changes a spherical aberration to be the other of under-correction and over-correction of the spherical aberration only for the second light flux among the first light flux, the second light flux, and the third light flux.

**2.** The optical pickup device of claim 1, satisfying following expressions:

$$m1 - 0.02 < m2 < m1 + 0.02,$$

and

$$m1 - 0.02 < m3 < m1 + 0.02.$$

**3.** The optical pickup device of claim 1,

each of the magnifications m1, m2, and m3 of the objective optical unit is almost zero.

**4.** The optical pickup device of claim 3, satisfying following expressions:

$$-0.02 < m1 < 0.02,$$

$$-0.02 < m2 < 0.02,$$

and

$$-0.02 < m3 < 0.02.$$

**5.** The optical pickup device of any one of claims 1 to 4,

wherein when the first light flux enters into the objective optical unit, a combination of a refractive function of the objective optical unit and an optical function provided by the first optical path difference providing structure makes a converged light spot on the information recording surface of the first optical information recording medium,

when the second light flux enters into the objective optical unit, a combination of a refractive function of the objective optical unit, an optical function provided by the first optical path difference providing structure, and an optical function provided by the second optical path difference providing structure makes a converged light spot on the information recording surface of the second optical information recording medium, and
when the third light flux enters into the objective optical unit, a combination of a refractive function of the objective optical unit and an optical function provided by the first optical path difference providing structure makes a converged light spot on the information recording surface of the third optical information recording medium.

6. The optical pickup device of any one of claims 1 to 5,
wherein the first optical path difference providing structure and the second optical path difference providing structure are formed to be superimposed each other and are placed on a same optical surface in the objective optical unit.

7. The optical pickup device of claim 6,
wherein the optical surface having the first optical path difference providing structure and the second optical path difference providing structure is arranged at a light source side.

8. The optical pickup device of any one of claims 1 to 7,
wherein the objective optical unit comprises an optical functional surface having
a central region including an optical axis and
a peripheral region surrounding the central region,
the central region includes the first optical path difference providing structure and the second optical path difference providing structure,
the central region is used for making a converged light spot on each of information recording surfaces of the first optical information recording medium, the second optical information recording medium, and the third optical information recording medium, and
the peripheral region is used for making a converged light spot only on each of information recording surfaces of the first optical information recording medium and the second optical information recording medium among the information recording surfaces of the first to third optical information recording media.

9. The optical pickup device of any one of claims 1 to 8,
wherein the first optical path difference providing structure is a serrated diffractive structure.

10. The optical pickup device of claim 9,
wherein when the first optical path difference providing structure is a diffractive structure, a mean step amount d1 of the ring-shaped zones of the diffractive structure in a parallel direction to an optical axis satisfies a following expression:

$$\mathrm{MOD(d1 \ x \ (n1 \ - \ 1) \ / \ \lambda 1) \ x \ \lambda 1 < MOD(d1 \ x \ (n2 \ - \ 1) \ / \ \lambda 2)}$$
$$\mathrm{x \ \lambda 2,}$$

where MOD($\alpha$) is an integer value closest to $\alpha$,
n1 is a refractive index of a material forming the first optical path difference providing structure for the wavelength $\lambda 1$,
n2 is a refractive index of a material forming the first optical path difference providing structure for the wavelength $\lambda 2$, and
d1 represents a following expression when m is a number of the ring-shaped zones, and each of D1, D2, and D3... is a step amount of each of the ring-shaped zones:

$$\mathrm{d1 \ = \ (D1 \ + \ D2 \ + \ D3...)/m.}$$

11. The optical pickup device of claim 9,
wherein a mean step amount d2 of the ring-shaped zones of the first optical path difference providing structure in a parallel direction to an optical axis satisfies a following expression:

$$\mathrm{1 \ \leq \ d2 \ x \ (n1 \ - \ 1) \ / \ \lambda 1 < 1.5,}$$

where n1 is a refractive index of a material forming the first optical path difference providing structure for the wavelength λ1, and
d2 represents a following expression when m is a number of the ring-shaped zones, and each of D1, D2, and D3...
is a step amount of each of the ring-shaped zones:

$$d2 = (D1 + D2 + D3...)/m.$$

**12.** The optical pickup device of any one of claims 9 to 11,
wherein a mean step amount d2 of the ring-shaped zones of the first optical path difference providing structure in a parallel direction to an optical axis satisfies a following expression:

$$MOD(d2 \times (n1 - 1) / \lambda1) = 3,$$

where MOD(α) is an integer value closest to α,
n1 is a refractive index of a material forming the first optical path difference providing structure for the wavelength λ1, and
d2 represents a following expression when m is a number of the ring-shaped zones, and each of D1, D2, and D3...
is a step amount of each of the ring-shaped zones:
d2 = (D1 + D2 + D3...)/m.

**13.** The optical pickup device of any one of claims 1 to 8,
wherein the first optical path difference providing structure is a NPS (Non-Periodic Phase Structure).

**14.** The optical pickup device of any one of claims 1 to 13,
wherein the second optical path difference providing structure is a serrated diffractive structure.

**15.** The optical pickup device of claim 14,
wherein a mean step amount d3 of the ring-shaped zones of the second optical path difference providing structure in a parallel direction to an optical axis satisfies a following expression:

$$MOD(d3 \times (n1' - 1) / \lambda1) = 2,$$

where MOD(α) is an integer value closest to α,
n1' is a refractive index of a material forming the second optical path difference providing structure for the wavelength λ1, and
d3 represents a following expression when m is a number of the ring-shaped zones, and each of D1, D2, and D3...
is a step amount of each of the ring-shaped zones:

$$d3 = (D1 + D2 + D3...)/m.$$

**16.** The optical pickup device of any one of claims 1 to 13,
wherein the second optical path difference providing structure is a superimposed type diffractive structure having patterns concentrically arranged therein, each of the patterns having a cross section including an optical axis with a stepped shape having a plurality of levels, and
each step of the stepped shape is shifted per a predefined number of the levels by a height of steps corresponding to the predefined number of levels.

**17.** The optical pickup device of claim 16,
wherein a mean step amount d4 of ring-shaped zones of the patterns of the second optical path difference providing structure in a parallel direction to an optical axis satisfies a following expression:

$$MOD(d4 \times (n1' - 1) / \lambda1) = 2k,$$

where MOD($\alpha$) is an integer value closest to $\alpha$,
n1' is a refractive index of a material forming the second optical path difference providing structure for the wavelength $\lambda$1, and
d4 represents a following expression when m is a number of the ring-shaped zones, and each of D1, D2, and D3... is a step amount of each of the ring-shaped zones:

$$d4 = (D1 + D2 + D3...)/m.$$

18. The optical pickup device of claim 16,
    wherein the levels in each of the patterns of the second optical path difference providing structure are formed along a base aspheric surface of the objective optical unit.

19. The optical pickup device of any one of claims 1 to 13,
    wherein the second optical path difference providing structure is a NPS (Non-Periodic Phase Structure).

20. The optical pickup device of any one of claims 1 to 19,
    wherein the wavelength $\lambda$1 satisfies 380 nm < $\lambda$1 < 420 nm,
    the wavelength $\lambda$2 satisfies 630 nm < $\lambda$2 < 680 nm,
    the wavelength $\lambda$3 satisfies 760 nm < $\lambda$3 < 830 nm,
    the thickness t1 satisfies 0.0875 mm $\leq$ t1 $\leq$ 0.1125 mm,
    the thickness t2 satisfies 0.5 mm $\leq$ t2 $\leq$ 0.7 mm, and
    the thickness t3 satisfies 1.1 mm $\leq$ t3 $\leq$ 1.3 mm.

21. The optical pickup device of any one of claims 1 to 19,
    wherein the wavelength $\lambda$1 satisfies 380 nm < $\lambda$1 < 420 nm,
    the wavelength $\lambda$2 satisfies 630 nm < $\lambda$2 < 680 nm,
    the wavelength $\lambda$3 satisfies 760 nm < $\lambda$3 < 830 nm,
    the thickness t1 satisfies 0.5 mm $\leq$ t1 $\leq$ 0.7 mm,
    the thickness t2 satisfies 0.5 mm $\leq$ t2 $\leq$ 0.7 mm, and
    the thickness t3 satisfies 1.1 mm $\leq$ t3 $\leq$ 1.3 mm.

22. The optical pickup device of any one of claims 1 to 21,
    wherein a material of the objective optical unit is glass.

23. The optical pickup device of any one of claims 1 to 21,
    wherein a material of the objective optical unit is plastic.

24. An objective optical unit, comprising:

    a first optical path difference providing structure formed by ring-shaped zones; and
    a second optical path difference providing structure formed by ring-shaped zones,

    wherein when a first light flux with a wavelength $\lambda$1 enters into the objective optical unit with a magnification M and converges on an information recording surface of a first optical information recording medium having a protective layer with a thickness t1,
    when a second light flux with a wavelength $\lambda$2 ($\lambda$1 < $\lambda$2) enters into the objective optical unit with a magnification M and converges on an information recording surface of a second optical information recording medium having a protective layer with a thickness t2 (t1 $\leq$ t2), and
    when a third light flux with a wavelength $\lambda$3 (1.9 x $\lambda$1 < $\lambda$3 < 2.1 x $\lambda$1) enters into the objective optical unit with a magnification M and converges on an information recording surface of a third optical information recording medium having a protective layer with a thickness t3 (t2 $\leq$ t3),
    the first optical path difference providing structure provides an optical path difference equivalent to odd times of the wavelength λ1 to the first light flux passing through adjoining ring-shaped zones, and changes a spherical aberration to be one of under-correction and over-correction of the spherical aberration for all of the first light flux, the second light flux, and the third light flux, and

the second optical path difference providing structure provides an optical path difference equivalent to even times of the wavelength λ1 to the first light flux passing through adjoining ring-shaped zones, and changes a spherical aberration to the other of under-correction and over-correction of the spherical aberration only for the second light flux among the first light flux, the second light flux, and the third light flux.

**25.** The objective optical unit of claim 24,
wherein the magnification M of the objective optical unit is almost zero.

**26.** The objective optical unit of claim 25, satisfying -0.02 < M < 0.02

**27.** The objective optical unit of any one of claims 24 to 26,
wherein when the first light flux enters into the objective optical unit, a combination of a refractive function of the objective optical unit and an optical function provided by the first optical path difference providing structure makes a converged light spot on the information recording surface of the first optical information recording medium,
when the second light flux enters into the objective optical unit, a combination of a refractive function of the objective optical unit, an optical function provided by the first optical path difference providing structure, and an optical function provided by the second optical path difference providing structure makes a converged light spot on the information recording surface of the second optical information recording medium, and
when the third light flux enters into the objective optical unit, a combination of a refractive function of the objective optical unit and an optical function provided by the first optical path difference providing structure makes a converged light spot on the information recording surface of the third optical information recording medium.

**28.** The objective optical unit of any one of claims 24 to 27,
wherein the first optical path difference providing structure and the second optical path difference providing structure are formed to be superimposed each other and arranged on a same optical surface in the objective optical unit.

**29.** The objective optical unit of claim 28,
wherein the optical surface having the both optical path difference providing structures is arranged at a light source side.

**30.** The objective optical unit of any one of claims 24 to 29,
wherein the objective optical unit further comprises an optical functional surface having a central region including an optical axis and a peripheral region surrounding the central region,
the central region includes the first optical path difference providing structure and the second optical path difference providing structure,
when the first light flux with a wavelength λ1 enters into the objective optical unit, passes through the central region and the peripheral region, and converges with a magnification M on the information recording surface of the first optical information recording medium having a substrate with a thickness t1,
when the second light flux with a wavelength λ2 (λ1 < λ2) enters into the objective optical unit, passes through the central region and the peripheral region, and converges with a magnification M on the information recording surface of the second optical information recording medium having a substrate with a thickness t2 (t1 ≤ t2), and
when the third light flux with a wavelength λ3 (1.9 x λ1 < λ3 < 2.1 x λ1) enters into the objective optical unit, passes through the central region, and converges with a magnification M on the information recording surface of the third optical information recording medium having a substrate with a thickness t3 (t2 < t3),
the first optical path difference providing structure provides an optical path difference equivalent to odd times of the wavelength λ1 to the first light flux passing through adjoining ring-shaped zones, and changes a spherical aberration to be one of under-correction and over-correction for all of the first light flux, the second light flux, and the third light flux,
when the first light flux with a wavelength λ1 enters into the objective optical unit, passes through the central region and the peripheral region, and converges with a magnification M on the information recording surface of the first optical information recording medium having a substrate with a thickness t1,
when the second light flux with a wavelength λ2 enters into the objective optical unit, passes through the central region and the peripheral region, and converges with a magnification M on the information recording surface of the second optical information recording medium having a substrate with a thickness t2, and
when the third light flux with a wavelength λ3 enters into the objective optical unit, passes through the central region, and converges with a magnification M on the information recording surface of the third optical information recording medium having a substrate with a thickness t3,
the second optical path difference providing structure provides an optical path difference equivalent to even times of the wavelength λ1 to the first light flux passing through adjoining ring-shaped zones, and changes a spherical aberration to be the other of under-correction and over-correction of the spherical aberration only for the second light flux among the first light flux, the second light flux, and the third light flux.

**31.** The objective optical unit of any one of claims 24 to 30,
wherein the first optical path difference providing structure is a serrated diffractive structure.

**32.** The objective optical unit of claim 31,
wherein when the first optical path difference providing structure is a diffractive structure, a mean step amount d1 of the ring-shaped zones of the diffractive structure in a parallel direction to an optical axis satisfies a following expression:

$$\mathtt{MOD(d1 \ x \ (n1 \ - \ 1) \ / \ \lambda1) \ x \ \lambda1 \ < \ MOD(d1 \ x \ (n2 \ - \ 1) \ / \ \lambda2)}$$

$$\mathtt{x \ \lambda2,}$$

where MOD(α) is an integer value closest to α,
n1 is a refractive index of a material forming the first optical path difference providing structure for the wavelength λ1,
n2 is a refractive index of a material forming the first optical path difference providing structure for the wavelength λ2, and
d1 represents a following expression when m is a number of the ring-shaped zones, and each of D1, D2, and D3... is a step amount of each of the ring-shaped zones:

$$\mathtt{d1 \ = \ (D1 \ + \ D2 \ + \ D3...)/m.}$$

**33.** The objective optical unit of claim 31,
wherein a mean step amount d2 of the ring-shaped zones of the first optical path difference providing structure in a parallel direction to an optical axis satisfies a following expression:

$$\mathtt{1 \ \leq \ d2 \ x \ (n1 \ - \ 1) \ / \ \lambda1 \ < \ 1.5,}$$

where n1 is a refractive index of a material forming the first optical path difference providing structure for the wavelength λ1, and
d2 represents a following expression when m is a number of the ring-shaped zones, and each of D1, D2, and D3... is a step amount of each of the ring-shaped zones:

$$\mathtt{d2 \ = \ (D1 \ + \ D2 \ + \ D3...)/m.}$$

**34.** The objective optical unit of any one of claims 31 to 33,
wherein a mean step amount d2 of the ring-shaped zones of the first optical path difference providing structure in a parallel direction to an optical axis satisfies a following expression:

$$\mathtt{MOD(d2 \ x \ (n1 \ - \ 1) \ / \ \lambda1) \ = \ 3,}$$

where MOD(α) is an integer value closest to α,
n1 is a refractive index of a material forming the first optical path difference providing structure for the wavelength λ1, and

d2 represents a following expression when m is a number of the ring-shaped zones, and each of D1, D2, and D3... is a step amount of each of the ring-shaped zones:

$$d2 = (D1 + D2 + D3...)/m.$$

35. The objective optical unit of any one of claims 24 to 30,
wherein the first optical path difference providing structure is a NPS (Non-Periodic Phase Structure).

36. The objective optical unit of any one of claims 24 to 35,
wherein the second optical path difference providing structure is a serrated diffractive structure.

37. The objective optical unit of claim 36,
wherein a mean step amount d3 of the ring-shaped zones of the second optical path difference providing structure in a parallel direction to an optical axis satisfies a following expression:

$$MOD(d3 \times (n1' - 1) / \lambda 1) = 2,$$

where MOD($\alpha$) is an integer value closest to $\alpha$,
n1' is a refractive index of a material forming the second optical path difference providing structure for the wavelength λ1, and
d3 represents a following expression when m is a number of the ring-shaped zones, and each of D1, D2, and D3... is a step amount of each of the ring-shaped zones:

$$d3 = (D1 + D2 + D3...)/m.$$

38. The objective optical unit of any one of claims 24 to 35,
wherein the second optical path difference providing structure is a superimposed type diffractive structure having patterns concentrically arranged therein, each of the patterns having a cross section including an optical axis with a stepped shape having a plurality of levels, and
each step of the stepped shape is shifted per a predefined number of the levels by a height of steps corresponding to the predefined number of levels.

39. The objective optical unit of claim 38,
wherein a mean step amount d4 of ring-shaped zones of the patterns of the second optical path difference providing structure in a parallel direction to an optical axis satisfies a following expression:

$$MOD(d4 \times (n1' - 1) / \lambda 1) = 2k,$$

where MOD($\alpha$) is an integer value closest to $\alpha$,
n1' is a refractive index of a material forming the second optical path difference providing structure for the wavelength λ1,
d4 represents a following expression when m is a number of the ring-shaped zones, and each of D1, D2, and D3... is a step amount of each of the ring-shaped zones:

$$d4 = (D1 + D2 + D3...)/m.$$

40. The objective optical unit of claim 38,

wherein the levels in each of the patterns of the second optical path difference providing structure are formed along a base aspheric surface of the objective optical unit.

**41.** The objective optical unit of any one of claims 24 to 35,
wherein the second optical path difference providing structure is a NPS (Non-Periodic Phase Structure).

**42.** The objective optical unit of any one of claims 24 to 41,
wherein the wavelength $\lambda 1$ satisfies 380 nm < $\lambda 1$ < 420 nm,
the wavelength $\lambda 2$ satisfies 630 nm < $\lambda 2$ < 680 nm,
the wavelength $\lambda 3$ satisfies 760 nm < $\lambda 3$ < 830 nm,
the thickness t1 satisfies 0.0875 mm $\leq$ t1 $\leq$ 0.1125 mm, the thickness t2 satisfies 0.5 mm $\leq$ t2 $\leq$ 0.7 mm, and
the thickness t3 satisfies 1.1 mm $\leq$ t3 $\leq$ 1.3 mm.

**43.** The objective optical unit of any one of claims 24 to 41,
wherein the wavelength $\lambda 1$ satisfies 380 nm < $\lambda 1$ < 420 nm,
the wavelength $\lambda 2$ satisfies 630 nm < $\lambda 2$ < 680 nm,
the wavelength $\lambda 3$ satisfies 760 nm < $\lambda 3$ < 830 nm,
the thickness t1 satisfies 0.5 mm $\leq$ t1 $\leq$ 0.7 mm,
the thickness t2 satisfies 0.5 mm $\leq$ t2 $\leq$ 0.7 mm, and
the thickness t3 satisfies 1.1 mm $\leq$ t3 $\leq$ 1.3 mm.

**44.** The objective optical unit of any one of claims 24 to 43,
wherein a material of the objective optical unit is glass.

**45.** The objective optical unit of any one of claims 24 to 43,
wherein a material of the objective optical unit is plastic.

**46.** A designing method of an objective optical unit for used in an optical pickup device for
making a converged light spot on an information recording surface of a first optical information recording medium having a protective layer with a thickens t1 using a first light flux with a wavelength $\lambda 1$ emitted from a first light source,
making a converged light spot on an information recording surface of a second optical information recording medium having a protective layer with a thickens t2 (t1 $\leq$ t2) using a second light flux with a wavelength $\lambda 2$ ($\lambda 1$ < $\lambda 2$) emitted from a second light source, and
making a converged light spot on an information recording surface of a third optical information recording medium having a protective layer with a thickens t3 (t2 < t3) using a third light flux with a wavelength $\lambda 3$ (1.9 x $\lambda 1$ < $\lambda 3$ < 2.1 x $\lambda 1$) emitted from a third light source, the designing method comprising:

a first step of designing
a plurality of refractive optical surfaces of the objective optical unit, and
a first optical path difference providing structure formed on one optical surface of the plurality of refractive optical surfaces, including ring-shaped zones, and providing an optical path difference equivalent to odd times of the wavelength $\lambda 1$ to the first light flux passing through adjoining ring-shaped zones,
so that the objective optical unit corrects a spherical aberration of the objective optical unit when the first light flux enters into the objective optical unit whose magnification is to be M and a converged light spot is formed on the information recording surface of a first optical information recording medium, and
the objective optical unit corrects a spherical aberration of the objective optical unit when the third light flux enters into the objective optical unit whose magnification is to be M and a converged light spot is formed on the information recording surface of a third optical information recording medium; and
a second step of designing a second optical path difference providing structure formed on one optical surface of the plurality of refractive optical surfaces, including ring-shaped zones, and providing an optical path difference equivalent to odd times of the wavelength $\lambda 1$ to the first light flux passing through adjoining ring-shaped zones,
so that the objective optical unit corrects a spherical aberration of the objective optical unit when the second light flux enters into the objective optical unit designed by the first step whose magnification is to be M and a converged light spot is formed on the information recording surface of a second optical information recording medium.

# FIG. 1

PU1

# FIG. 2

EFFECTIVE AREA OF THE
FIRST WAVELENGTH $\lambda 1$
(PERIPHERAL REGION PR)

EFFECTIVE AREA OF THE
SECOND WAVELENGTH $\lambda 2$
(CENTRAL REGION CR)

OBJ

PS

DS

X

THE BLAZE STRUCTURE
FACING POSITIVE DIRECTION

ENVELOPE EXPRESSING THE SHAPE OF
THE PHASE STRUCTURE PS

EP 1 858 012 A1

# FIG. 3

OBJ

EFFECTIVE AREA OF THE
FIRST WAVELENGTH λ1
(PERIPHERAL REGION PR)

EFFECTIVE AREA OF THE
SECOND WAVELENGTH λ2
(CENTRAL REGION CR)

R3

R2

R1

X

ENVELOPE EXPRESSING THE SHAPE
OF THE PHASE STRUCTURE PS

EP 1 858 012 A1

FIG. 4 ( a )

FIG. 4 ( b )

FIG. 4 ( c )

FIG. 5 ( a )

FIG. 5 ( b )

FIG. 5 ( c )

## FIG. 6 ( a )

## FIG. 6 ( b )

## FIG. 6 ( c )

## INTERNATIONAL SEARCH REPORT

| International application No. |
| --- |
| PCT/JP2006/303414 |

A. CLASSIFICATION OF SUBJECT MATTER
*G11B7/135*(2006.01), *G02B5/18*(2006.01), *G02B13/18*(2006.01)

According to International Patent Classification (IPC) or to both national classification and IPC

B. FIELDS SEARCHED

Minimum documentation searched (classification system followed by classification symbols)
G11B7/12-7/22, G02B5/18, G02B5/30-5/32, G02B9/00-17/08, G02B21/02-21/04,
G02B25/00-25/04

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2005-038585 A  (Konika Minoruta Oputo Kabushiki Kaisha), 10 February, 2005 (10.02.05), Par. Nos. [0118] to [0120]; Fig. 19 & US 2004/0264348 A1 | 1-46 |
| A | JP 2005-038575 A  (Konika Minoruta Oputo Kabushiki Kaisha), 10 February, 2005 (10.02.05), Par. Nos. [0041] to [0045]; Fig. 11 (Family: none) | 1-46 |
| A | JP 2004-247025 A  (Konica Minolta Holdings Kabushiki Kaisha), 02 September, 2004 (02.09.04), Par. Nos. [0153] to [0157]; Fig. 11 & US 2004/0047269 A1 | 1-46 |

☒  Further documents are listed in the continuation of Box C.      ☐  See patent family annex.

| | |
| --- | --- |
| *     Special categories of cited documents: | "T"    later document published after the international filing date or priority date and not in conflict with the application but cited to understand the principle or theory underlying the invention |
| "A"    document defining the general state of the art which is not considered    to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| 20 March, 2006 (20.03.06) | 28 March, 2006 (28.03.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/303414

C (Continuation).   DOCUMENTS CONSIDERED TO BE RELEVANT

| Category* | Citation of document, with indication, where appropriate, of the relevant passages | Relevant to claim No. |
|---|---|---|
| A | WO 03/091764 A1  (Matsushita Electric Industrial Co., Ltd.), 06 November, 2003 (06.11.03), Page 50, line 10 to page 57, line 22; Fig. 1 & EP 1500956 A1          & CN 1659455 A | 1-46 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004079146 A
- JP 2004144951 A
- JP 2004 A

- JP 144953 A
- JP 2004144954 A

**Non-patent literature cited in the description**

- **G. SCHMID.** *Adv. Mater.,* 1991, vol. 4, 494

- **D. FENSKE.** *Angew. Chem. Int. Ed. Engl.,* 1990, vol. 29, 1452